# EUROPÄISCHE PATENTANMELDUNG

(11) **EP 1 053 847 A2**
(43) Veröffentlichungstag der Anmeldung: **22.11.2000**
(21) Anmeldenummer: 99121108.7
(22) Anmeldetag: 22.10.1999
(51) Int. Cl.: B29C 33/30, B29C 33/42, B29C 33/00

(54) **Formeinsatz**

(30) Priorität: 22.10.1998 US 177267
(71) Anmelder: Wieder, Klaus A., Helenville, Wisconsin 53137 (US)
(72) Erfinder: Wieder, Klaus A., Helenville, Wisconsin 53137 (US)
(74) Vertreter: Schneck, Herbert, Dipl.-Phys., Dr.

(57) **Zusammenfassung**

Die vorliegende Erfindung betrifft einen Einsatz für eine Form zum Einwirken auf ein härtbares Material in einer Form und insbesondere auf einen drehbaren Einsatz zur Steuerung der Fließrichtung des härtbaren Materials oder zum Eindrücken eines Stempels in das härtbare Material.

Ein Einsatz für eine Form umfaßt einen Stopfen (56,68) mit einer Einsatzfläche und eine durch eine Seitenwand begrenzten Aufnahme, wobei entweder der Stopfen (56,68) oder die Aufnahme eine Nut (58) hat, die eine Führung aufnimmt, welche sich von dem jeweils anderen Bauteil, der Aufnahme oder dem Stopfen (56,68) erstreckt, um so eine Drehung des Stopfens (56,68) zu erleichtern und gleichzeitig einem Herausziehen des Stopfens entgegenzuwirken. In einer bevorzugten Ausführungsform hat die Nut (58) einen schrägen Eingangsweg (60), der die Stopfeneinführung und -herausnahme erleichtert, und einen quer verlaufenden Abschnitt (62) und erstreckt sich die Nut umfänglich nicht mehr als etwa eineinhalb Drehung um den Stopfen herum. Eine mit Rasten (256) auf dem Stopfen (56,68) und einem durch die Aufnahme getragenen Anschlag (258) versehene Anschlaganordnung ermöglicht daß der Stopfen (56) wahlweise eingerastet wird.

## Beschreibung

### Gebiet der Erfindung

Die vorliegende Erfindung betrifft einen Einsatz für eine Form zum Einwirken auf ein härtbares Material in einer Form und insbesondere auf einen drehbaren Einsatz zur Steuerung der Fließrichtung des härtbaren Materials oder zum Eindrücken eines Stempels in das härtbare Material.

### Hintergrund der Erfindung

Für Formen aller Art ist allgemein bekannt, daß diese mit mehreren Formenhohlräumen ausgestattet sind, um die Produktion zu steigern. Es werden jedoch nicht alle Hohlräume gleichzeitig benötigt. Daher wird ein Mechanismus benötigt, welcher den Fluß wahlweise direkt zu einem oder mehreren Hohlräumen oder bedarfsweise zu keinem der Hohlräume lenkt.

Ein solcher Mechanismus ist im US Patent Nr. 5,208,053 offenbart und besteht aus drei Teilen, einem Halter, einem Kernstift und einem Außengehäuse. Leider ist keine Vorkehrung offenbart, um den Kernstift zu entfernen, ohne den gesamten Mechanismus durch Einführen eines Stift- oder Schraubendrehers durch eine Bohrung in der Rückseite der Form gegen den Halter ausschlagen zu müssen. Ein solches Verfahren ist zeitraubend, was wiederum die Stillstandszeit der Form verlängert und somit sehr teuer ist. Darüber hinaus sind nur vier Kernstiftpositionen offenbart, was die Anzahl der verfügbaren Fließoptionen beschränkt. Schließlich dient der Mechanismus nicht dazu, den Fluß in einen bestimmten Hohlraum zu drosseln. Wenn der Kernstift auf eine Position eingestellt ist, verhindert ein zwischen dem Halter und dem Kernstift angeordneter Bolzen die Drehung des Kernstiftes. Um den Kernstift zu drehen und den Fluß umzulenken, muß der Bolzen in den Halter geschoben werden, was zeitraubend und schwierig ist. Ein solcher Einsatz ist zudem ungeeignet zum Eindrücken eines Stempels, wie eines Datums, einer Zeit oder eines Materialtyps, in das härtbare Material.

Was deshalb benötigt wird, ist ein drehbarer Formeinsatz, der schnell und leicht entfernt oder eingesetzt werden kann. Was weiter benötigt wird, ist ein Einsatz, der schnell, leicht und präzise mit einem Stempel versehen werden kann. Was ebenfalls benötigt wird, ist ein Einsatz, der jede Art von Einsatz, einschließlich z. B. flußlenkende Einsätze oder stempeleindrückende Einsätze, beinhalten kann. Was ferner noch benötigt wird, ist ein Einsatz, der für unterschiedliche Funktionen anpassungsfähig und geeignet ist. Was darüber hinaus benötigt wird, ist ein Einsatz, der von einem Ende eines Ausdrückstiftes getragen bzw. an einem Ende eines Ausdrückstiftes angebracht ist.

### Aufgaben und Zusammenfassung der Erfindung

Ein Einsatz für eine Form zum Umleiten eines Flusses eines härtbaren Materials oder zum Eindrücken eines Stempels in das härtbare Material umfaßt einen Stopfen, der drehbar ist und der ggf. schnell und leicht entfernt und bei Bedarf ausgetauscht werden kann. Im Betrieb kann der Stopfen, wenn die Formhälften getrennt sind, unter Verwendung eines Werkzeugs, wie einem Schraubendreher, zu der gewünschten Einstellung gedreht werden. Während eines Betriebs der Form hat der Stopfen eine Einsatzfläche, die z. B. ein oder mehrere strömungslenkende Kanäle haben oder einen Stempel aufweist, der in das härtbare Material eingedrückt wird.

Der Stopfen hat eine axiale Außenfläche, die sich in Kontakt mit dem härtbaren Material befindet. Der Stopfen hat einen Körper, der vorzugsweise im wesentlichen zylindrisch ist, einen größeren Kopf umfaßt, der die Einsatzfläche trägt und der in einer Aufnahme aufgenommen ist, die vorzugsweise eine durch eine Seitenwand gebildete Tasche umfaßt. Die Tasche ist vorzugsweise in einer der Formhälften, einem Ausdrückstift, einer weiteren Formkomponente oder einem abnehmbaren Lagerteil ausgebildet. Ein Drehmechanismus wirkt mit dem Stopfen und der Aufnahme operativ zusammen, derart, daß der Stopfen drehbar und vorzugsweise stempelfähig ist.

In einer bevorzugten Ausführungsform hat entweder der Stopfen oder die Aufnahme eine Nut die eine Führung aufnimmt, welche sich von dem jeweils anderen Teil, also Aufnahme oder Stopfen, erstreckt, um so eine Drehung des Stopfens zu erleichtern und gleichzeitig einem Herausziehen des Stopfens entgegenzuwirken. Die Führung ist ein Vorsprung, der vorzugsweise einen Stift oder eine Kugel umfaßt.

Die Führung ist ein Positionierer, der in die Nut gedrückt wird. Zum Beispiel kann die Führung durch einen Stift, einen Finger oder eine Feder radial in die Nut gedrückt werden. Der Finger umfaßt vorzugsweise eine Blattfeder oder Balkenfeder, die durch ein Befestigungselement verankert ist. Der Finger ist vorzugsweise eine Schraubenfeder, die durch eine Schraube oder einen Bolzen zurückgehalten wird. Die Feder kann einen Federkolben oder dergleichen umfassen.

In einer bevorzugten Ausführungsform erstreckt sich die Nut um den Umfang des Stopfens und ist so geformt daß sie die Führung akzeptiert. Die Nut hat einen quer verlaufenden Abschnitt und einen Eingangsweg, der in Bezug zu dem quer verlaufenden Abschnitt geneigt ist. Der Eingangsweg ist so konstruiert und ausgebildet, daß er die Führung akzeptiert, um die Einführung des Stopfens in die Aufnahme und die Entfernung des Stopfens aus der Aufnahme schnell und leicht zu ermöglichen.

In ihrer bevorzugten Ausführungsform umfaßt die Nut einen einzigen, quer verlaufenden Abschnitt und einen einzigen Eingangsweg. Der quer verlaufende Abschnitt erstreckt sich nicht weiter als etwa über einen Umlauf um den Stopfen herum, und der Eingangsweg erstreckt sich weniger als über einen Umlauf um den Stopfen herum. Vorzugsweise ist der Eingangsweg in einem spitzen Winkel in Bezug zu dem quer verlaufenden Nutabschnitt geneigt. In einer bevorzugten Ausführungsform ist die Nut wenigstens etwa 0,40 Inch breit und wenigstens etwa 0,020 Inch tief, ihr quer verlaufender Abschnitt erstreckt sich zwischen etwa 250° und etwa 330° um den Stopfenkörper herum und ihr Eingangsweg ist in einem Winkel von zwischen etwa 20° und etwa 40° geneigt. Vorzugsweise erstreckt sich der Eingangsweg zwischen ° und etwa ° des Stopfenkörpers. Vorzugsweise erstreckt sich der Eingangsweg und der quer verlaufende Abschnitt wenigstens etwa über zwei Drittel eines Umlaufs um den Körper und nicht mehr als etwa ° um den Körper herum.

Damit der Stopfen in eine von einer Anzahl von vorbestimmten Positionen gedreht werden kann, hat der Kopf des Stopfens eine Schulter, die an der Stelle ausgeformt ist, an der sich der Stopfen in seinem Durchmesser auf die Weite des Körpers reduziert, und mit einer Anschlageinrichtung zusammenwirkt. Die Anschlageinrichtung umfaßt vorzugsweise eine Mehrzahl von umfänglich in Abstand liegende Rasten in einer axialen Oberfläche der Schulter, die mit einem oder mehreren Anschlägen in der Tasche zusammenwirken. Der Anschlag ist vorzugsweise ein Stift oder eine Kugel, der/die elastisch gegen die Schulter vorgespannt sein kann, um eine leichte Drehung und Stempelung zu ermöglichen.

Um den Stopfen aus der Tasche zu drehen oder zu entfernen, greift ein Werkzeug, wie eine Spitze eines Schraubendrehers, an die Oberseite des Stopfenkopfes an, um den Stopfen zu drehen. Um den Stopfen zu entfernen, wird der Stopfen in eine Richtung gedreht, bis die Führung den Eingangsweg erreicht. Eine weitere Drehung in eine Richtung bewirkt, daß die Führung weiter den Eingangsweg entlang gleitet, bis sie die Mündung oder Öffnung des Eingangsweges weicht und dadurch den Stopfen vollständig aus der Tasche freigibt Wenn sich die Führung den Eingangsweg entlang bewegt, verstellt der Winkel des Eingangsweges den Stopfen derart, daß seine Oberseite nicht länger mit der Form, dem Lagerteil oder dem Ausdrückstift, die den Stopfen tragen, fluchtet so daß dieser mit der Hand entfernt werden kann.

Beim Einführen des Stopfens wird der Stopfen in die Tasche gesteckt und in die entgegengesetzte Richtung gedreht bis die Führung in die Mündung des Eingangsweges eintritt. Eine weitere Drehung bewirkt, daß die Führung sich den Eingangsweg entlang bewegt, bis der Stopfen vollständig in der Tasche aufgenommen ist, derart, daß die Oberfläche mit der Form, dem Ausdrückstift oder das den Stopfen fragenden Lagerteil fluchtet. Eine weitere Drehung bewirkt, daß die Führung von dem Eingangsweg in den quer verlaufenden Abschnitt übergeht.

In einer weiteren bevorzugten Ausführungsform hat der Stopfen einen Vorsprung, der in eine Nut in der inneren Seitenwand, die die Tasche bildet eingreift Vorzugsweise ist der Vorsprung eine Kugel, die durch eine Polsterung, welche in einem Hohlraum in dem Körper aufgenommen ist von dem Stopfenkörper nach außen vorgespannt ist. Die Polsterung umfaßt vorzugsweise ein Elastomermaterial oder ein anderes elastisches, synthetisches oder natürliches Material. Eine Kappe oder ein Kern an einem Ende des Stopfenkörpers greift an den Körper an, um die Polsterung in dem Stopfen zurückzuhalten. In ihrer bevorzugten Ausführungsform ist die Kappe eine Schraube oder ein Bolzen.

Der Kopf des Stopfens ist in einer komplementären Aussparung in der Tasche aufgenommen. Vorzugsweise ist die Aussparung so gestaltet daß sie den Kopf derart aufnimmt, daß die äußere axiale Fläche des Kopfes im wesentlichen mit der umgebenden Form oder dem Lagerteil fluchtet.

Damit der Stopfen wahlweise eingerastet werden kann, wirkt ein Anschlagmechanismus bzw. eine solche Anordnung mit dem Stopfen zusammen. Der Anschlagmechanismus umfaßt einen von der Form, dem Ausdrückstift oder dem Lagerteil getragenen Anschlag, welcher wenigstens mit einer von einer Mehrzahl von Anschlagrasten in dem axialen Ende des Stopfenkörpers zusammenwirkt. In seiner bevorzugten Form umfaßt der Anschlag einen Stift oder eine Kugel, der/die sich im wesentlichen radial nach innen in die Tasche erstreckt.

Um das Entfernen des Stopfens zu erleichtern, gibt es eine Zugriffsöffnung in der Seitenwand. Ein Werkzeug wird durch die Öffnung eingeführt, wo es dazu benutzt wird, den Stopfen in Bezug zur Tasche nach oben zu hebeln, so daß dieser angefaßt und entfernt werden kann.

Wenn ein Lagerteil verwendet wird, hat das Lagerteil eine Stirnwand und eine umlaufende Seitenwand, die vorzugsweise zylindrisch ist, um eine zylindrische Tasche zu bilden. Das Lagerteil kann in der Form in seiner eigenen Tasche aufgenommen sein, welche z. B. eine Bohrung oder eine Vertiefung in der Form sein kann. Wenn das Lagerteil in seiner eigenen Tasche angeordnet ist, legt ein Befestigungselement das Lagerteil in der Form fest. Die Stirnwand hat eine Bohrung, durch welche das Befestigungsteil derart eingeführt wird, daß es in einer Gewindebohrung in der Form aufgenommen ist. Die Bohrung in der Stirnwand ist mit einem Gewinde versehen und größer als die Bohrung in der Form, so daß das Befestigungselement entfernt und eine Hebeschraube eingeführt werden kann, um das Lagerteil aus seiner Tasche zu entfernen, wenn das Lagerteil entfernt werden soll.

Ein Einsatz dieser Erfindung kann an einem Ausdrückstift angebracht sein bzw. von diesem getragen werden. Der Ausdrückstift umfaßt einen abnehmbaren Kopf und einen Zylinder, der auf die gewünschte Länge für die Form, in die er eingebaut werden soll, zugeschnitten sein kann. In einer bevorzugten Montageanordnung hat der Kopf eine Aufnahme mit einem Positionierer, vorzugsweise einer Platte, der ein komplementäres Ende des Zylinders aufnimmt. Das Ende des Kopfes hat eine Bohrung, das ein Befestigungselement aufnimmt, welches in den Zylinder geschraubt ist , um den Kopf an dem Zylinder anzubringen. Der Kopf hat einen Positionierer, vorzugsweise ein Flachteil, das in einen komplementären Positionierer eine Ausdrückplatteneinrichtung der Form eingreift, um den Ausdrückstift daran zu hindern, sich während des Formbetriebs zu drehen. Durch das Verhindern der Stiftdrehung wird die Umfangs- oder Winkelstellung der äußeren axialen Räche des Einsatzes während des Formbetriebs beibehalten.

In einer weiteren Ausführungsform des Ausdrückstiftes ist das Ende des Zylinders mit einem Gewinde versehen und in einer Gewindebohrung im Kopf eingeschraubt. In einer bevorzugten Kopfausbildung kann der Kopf im wesentlichen U-förmig mit ein Paar Armen sein, die durch einen Spalt getrennt sind, der geschlossen wird, um die Arme um den Zylinder herum einzuklemmen, wenn ein Befestigungselement an beide Arme angreift. Im eingebauten Zustand ist der Kopf vorzugsweise nicht in der Lage, sich in Bezug zum Zylinder zu drehen.

In einer weiteren bevorzugten Kopfausbildung hat der Kopf eine sich axial erstreckende Positioniernut in dem mit Gewinde versehenen Ende, welche einen sich radial nach innen ausdehnenden Positionierer eines Positioniererrings oder -scheibe aufnimmt, der/ die in einer Ausnehmung im Kopf aufgenommen ist. Der Ring hat wenigstens einen und vorzugsweise eine Mehrzahl von umfänglich in Abstand liegender Positionieren, die in Positioniererrasten der Ausnehmung aufgenommen sind. Im zusammengebauten Zustand verhindert der Ring, daß der Zylinder sich relativ zum Kopf dreht.

In noch einer weiteren bevorzugten Ausführungsform des Ausdrückstiftes wird der Stift an einer entfernten Lokalität teilweise geformt und fertiggestellt das kann z. B. dort sein, wo die Form steht in einer Formherstellungsanlage, bei einem Händler oder einem Endverbraucher. Der Stift wird teilweise aus einem Rohling gefertigt, der vorzugsweise ein Stabmaterial oder Rundmaterial ist, das teilweise maschinenbearbeitet ist um wenigstens einen Abschnitt des Zylinders zu bilden. Die äußere Oberfläche des Zylinders ist durch ein Härtungsverfahren, wie einem Strahlverfestigen, Nitrierhärten oder ein anderes geeignetes Härtungsverfahren, gehärtet.

Beim Fertigen des Stiftes, vorzugsweise nach dem Versenden an die entfernte Lokalität, wird die Länge des Stiftes festgelegt und der maschinell nicht bearbeitete Abschnitt maschinell bearbeitet um den Kopf zu bilden. Typischerweise wird ein Bereich des nicht maschinell bearbeiteten Abschnitts abgeschnitten, um den Stift auf die gewünschte Länge zuzuschneiden, bevor der Kopf und der Rest des Zylinders maschinell bearbeitet werden.

Bedarfsweise kann ein Positionieren, wie eine Positionierer-Flachteil oder dergleichen, maschinell in den Kopf eingearbeitet werden, um den Kopf und den Zylinder von einem Drehen während des Betriebs abzuhalten. Bedarfsweise kann ein Einsatz an das Ende des Zylinders, auf der entgegengesetzten Seite des Ausdrückstiftkopfes angebracht werden.

Aufgaben, Merkmale und Vorteile der vorliegenden Erfindung umfassen einen Formeinsatz, der leicht in eine Form einzubauen ist; leicht zu entfernen ist, schnell und leicht zu drehen ist, schnell und leicht zu ändern ist; eine Stillstandszeit der Form verringert, auf einem Ausdrückstift angebracht werden kann und ein Einsatz ist, der unempfindlich, einfach, flexibel, zuverlässig und haltbar ist und welcher ökonomisch herstellbar und leicht zusammenzubauen, zu installieren und zu verwenden ist.

Aufgaben, Merkmale und Vorteile der vorliegenden Erfindung umfassen einen Ausdrückstift, der leicht in eine Form einzubauen ist, die Stellung eines darin angebrachten Einsatzes hält, effizient herzustellen ist, weil er erst nach der anfänglichen Herstellung auf seine Länge zugeschnitten wird, und ein Ausdrückstift ist, der unempfindlich, einfach, flexibel, zuverlässig und haltbar ist, und welcher ökonomisch herstellbar und leicht zusammenzubauen, zu installieren und zu verwenden ist.

Weitere Aufgaben, Merkmale und Vorteile der vorliegenden Erfindung werden dem Fachmann aus der detaillierten Beschreibung und den beigefügten Zeichnungen deutlich. Es sei jedoch so verstanden, daß die detaillierte Beschreibung und die beigefügten Zeichnungen nur beispielhaft und nicht beschränkend gegeben werden, obwohl sie bevorzugte Ausführungsformen der vorliegenden Erfindung zeigen. Viele Änderungen und Modifikationen können im Rahmen des Schutzbereichs der vorliegenden Erfindung gemacht werden, ohne vom Erfindungsgedanken abzuweichen, und die Erfindung umfaßt alle solche Modifikationen.

### Kurzbeschreibung der Zeichnungen

Wenigstens eine bevorzugte, beispielhafte Ausführungsform der Erfindung ist in den beigefügten Zeichnungen dargestellt, in welchen gleiche Bezugszeichen durchgängig gleiche Bauteile darstellen, und in welchen:
- Fig. 1: eine Draufsicht einer Form mit einer Mehrzahl von verstellbaren Einsätzen der vorliegenden Erfindung zeigt, die von der Form getragen werden;
- Fig. 2: eine Ansicht im Querschnitt der Form entlang der Linie 2-2 aus Fig. 1 zeigt, die ein Paar von Einsätzen herausstellt, die von einem axial verschiebbaren Stift getragen werden;
- Fig. 3: eine Ansicht im Querschnitt der Form entlang der Linie 3-3 aus Fig. 1 zeigt, die ein weiteres Paar von Einsätzen herausstellt, die von einem Körper der Form getragen werden;
- Fig. 4: eine Ansicht eines Teilfragmentes im Querschnitt der Form mit einem Stopfen einer ersten bevorzugten Ausführungsform eines Einsatzes, in Explosionsdarstellung aus Gründen der Klarheit, zeigt;
- Fig. 5: eine vergrößerte Ansicht des in Fig. 4 gezeigten Einsatzes zeigt;
- Fig. 6: eine vergrößerte Ansicht eines Einsatzes, der von einem in Fig. 5 gezeigten Kreis umgeben ist, der eine schraubenförmige Nut darstellt, die die Drehung des Stopfens des Einsatzes erleichtert;
- Fig. 7: eine zweite bevorzugte Ausführungsform eines Einsatzes zeigt, der von einem der Stifte getragen wird;
- Fig. 8: eine Hülse des Einsatzes zur Aufnahme des Einsatzstopfens zeigt;
- Fig. 9A: eine dritte bevorzugte Ausführungsform des Einsatzes zeigt;
- Fig. 9B: eine vierte bevorzugte Ausführungsform des Einsatzes zeigt;
- Fig. 9C: eine fünfte bevorzugte Ausführungsform des Einsatzes zeigt;
- Fig. 10: eine Draufsicht des in Figs. 9A-9C gezeigten Einsatzstopfens zum Eindrücken eines Stempels in ein härtbares Material beim Kontakt mit der Oberfläche zeigt;
- Fig. 11: eine vergrößerte Explosionsansicht im Querschnitt der zweiten bevorzugten Ausführungsform des Einsatzes zeigt;
- Fig. 12: eine Draufsicht des in Fig. 11 gezeigten Einsatzstopfens zeigt;
- Fig. 13: noch eine weitere Stopfenausbildung zeigt;
- Fig. 14A: eine perspektivische Stirnansicht des in Fig. 13 gezeigten Stopfens zeigt;
- Fig. 14B: eine Bodenansicht des Stopfens zeigt;
- Fig. 14C: eine Draufsicht der Oberseite des Einsatzes zeigt;
- Fig. 15: eine perspektivische Explosionsansicht einer weiteren bevorzugten Ausführungsform des Einsatzes und eines Ausdrückstiftes, der eine bevorzugte Ausführungsform zum Anbringen des Stiftes an einen Kopf zeigt, darstellt;
- Fig. 16: eine perspektivische Explosionsdarstellung eines Einsatzes zum Lenken eines Flusses;
- Fig. 17-20: eine Steuerung des Flusses unter Verwendung des in Fig. 16 gezeigten Einsatzes darstellen;
- Fig. 21: eine perspektivische Ansicht einer weiteren Ausführungsform eines bevorzugten Ausdrückstiftes ist, die eine neue Montageanordnung zum Anbringen des Zylinders an einen Kopf darstellt, um den Stift zu bilden;
- Fig. 22: ein perspektivische Ansicht noch einer weiteren bevorzugten Ausführungsform eines Ausdrückstiftes, die noch eine weitere Montageanordnung darstellt; und
- Fig. 23: eine perspektivische Ansicht noch einer weiteren bevorzugten Ausführungsform eines Ausdrückstiftes ist.

### Detaillierte Beschreibung der bevorzugten Ausführungsform

### I. Einleitung

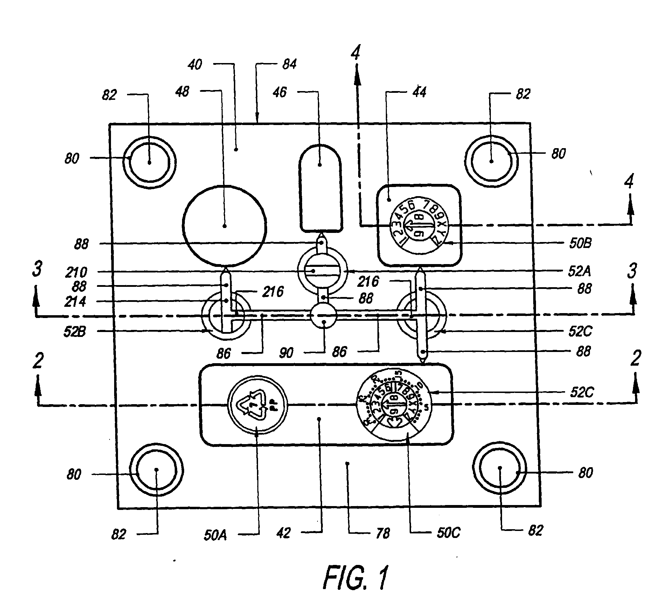

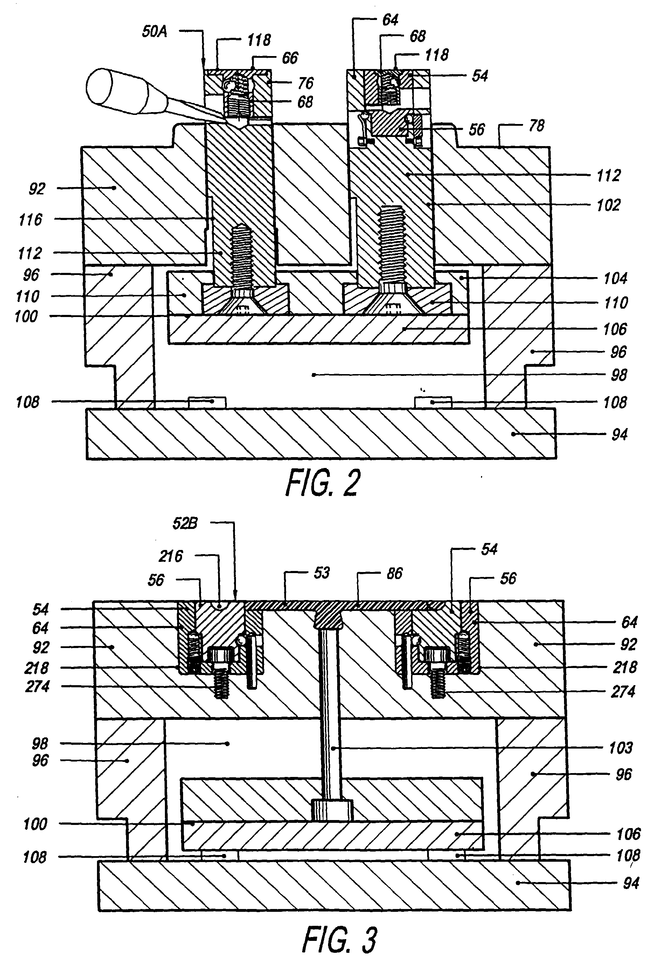

Die Figuren 1-4 stellen eine Form 40 dar, mit einer Mehrzahl von Hohlräumen 42, 44, 46 und 48 und einer Mehrzahl von Einsätzen 50a-50c und 52a-52c der vorliegenden Erfindung zum Steuern des Flusses eines Materials 53 (Fig. 3), die mit einem oder mehreren der Hohlräume 42, 44, 46 und 48 kommunizieren, und zum Eindrücken eines Stempels in das Material 53 in einem oder mehreren der Hohlräume 42 und 44, wenn das Material 53 in den Hohlräumen 42 und 44 aushärtet. Jeder Einsatz 50 und 52 umfaßt einen Drehmechanismus, um diesen in die Lage zu versetzen, sich relativ zur Form 40 zu drehen. Jeder Einsatz 50 und 52 ist an bestimmten Positionen einsetzbar, um den Fluß zu steuern oder zu lenken oder einen bestimmten Stempel auszuwählen, um diesen in das härtbare Material 53 in dem Formhohlraum einzudrücken.

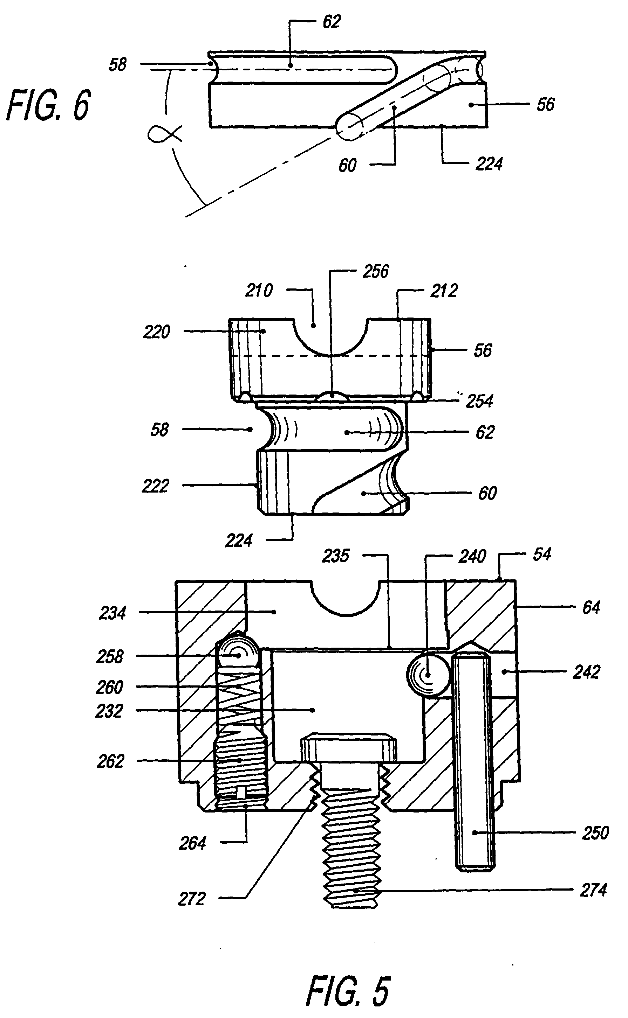

Mit Bezugnahme auf Fig. 5 hat ein bevorzugter Drehmechanismus 54 einen Stopfen 56 mit einer Ringnut 58, die in einer Aufnahme eingebracht ist, die in diesem Falle ein Lagerteil 64 umfaßt. Die Nut 58 hat einen schraubenförmigen Abschnitt 60, der dem Einsatz ermöglicht, leicht entfernt zu werden, wenn er über einen bestimmten Punkt hinaus gedreht wird. Die Nut 58 hat auch einen axialen oder quer verlaufenden Abschnitt 62, mit dem der Einsatz 50 oder 52 relativ zum Lagerteil 64 gedreht werden kann.

Ein weiterer bevorzugter Drehmechanismus 66 hat einen Stopfen 68, der ein Vorspannelement 70 verwendet, welches einen Positionierer 72, der in einer Innennut 74 in einem Lagerteil 76 läuft, nach außen drückt, was dazu beiträgt, den Stopfen 68 in dem Lagerteil 76 zurückzuhalten und gleichzeitig dessen Drehung relativ zum Lagerteil 76 gestattet.

Vorzugsweise kann jeder Drehmechanismus 54 und 66 mit wenigstens einer Mehrzahl von umfänglich in Abstand liegender Anschläge ausgebildet sein, so daß der Stopfen und der von dem Stopfen getragene Einsatz wahlweise auf bestimmte indizierte Einstellungen (Raststellungen) gedreht werden kann.

### II. Formaufbau

Ein Teil der beispielhaften Form 40 ist in Fig. 1 gezeigt. Der Formbereich ist vorzugsweise eine Formhälfte 84 mit einer äußeren Form-Hohlraumoberfläche 78 mit wenigstens einer Aussparung bzw. einem Hohlraum 42, 44, 46 oder 48 zum Aufnehmen eines Materials 53, das vorzugsweise eine Flüssigkeit ist, die aber härtbar ist. Die Form 40 hat einen weiteren Bereich, vorzugsweise eine weitere Formhälfte, die ebenfalls eine äußere Form-Hohlraumoberfläche aufweist, die ein oder mehrere Aussparungen haben kann, welche Formhohlräume sind. Die eine oder beide Formhälften haben vorzugsweise eine Mehrzahl von Positioniererbohrungen 80 jeweils zum Aufnehmen eines Führungsstiftes 82, der eine Formhälfte 84 in Bezug zu der anderen Formhälfte akkurat positioniert, derart, daß, wenn die Formhälften zusammengebracht sind, diese ganz genau zusammenpassen bzw. aneinander angreifen.

In der in Fig. 1 gezeigten, beispielhaften Formhälfte 84 hat einer der Hohlräume 44 einen einzelnen Einsatz 50b zum Eindrücken des Tages und des Jahres der Herstellung des Gusses in das Material 53 innerhalb des Hohlraums 44, wenn dieses aushärtet. Ein weiterer der Hohlräume 42 hat ein Paar von stempeleindrückenden Einsätzen 50a und 50c, die jeweils auf dem äußeren eines in dem Hohlraum 42 geformten Gegenstandes einen Eindruck hinterlassen bzw. einen Stempel eindrücken.

Damit das Material 53 jeden Formhohlraum 42, 44, 46 und 48 erreichen kann, gibt es eine Laufrinne 86, die als Versorgungskanal dient welche mit einzelnen Zuführkanälen, als Nebenlaufrinne 88 bezeichnet verbunden ist, von denen jeder zu einem Hohlraum führt. Eine oder beide Formhälften haben einen Angußzieher 90, der von einer Quelle des fließfähigen Materials 53 vorzugsweise zu dem Versorgungskanal 86 führt.

Wie in Fig. 1 dargestellt ist, können ein oder mehrere der Kanäle 86 und 88 einen Einsatz 52, als Flußlenker bezeichnet haben, der konstruiert und ausgebildet ist, um den Fluß durch den Kanal zu steuern. Einer der flußsteuernden Einsätze 52c ist in dem Versorgungskanal 86 angeordnet, wo er zu einem Paar von Zuführkanälen 88 verzweigt. Der Flußsteuereinsatz 52c kann gedreht werden, um den Fluß durch beide Zuführkanäle 88 vollständig zu blockieren, den Fluß durch einen der Zuführkanäle 88 zu blockieren, den Fluß durch einen der Zuführkanäle 88 zu erlauben oder den Fluß durch beide Zuführkanäle 88 zu erlauben.

Ein weiterer der flußsteuernden Einsätze 52a, bezeichnet als Laufrinnenabsperrglied, ist in einem der Zuführkanäle 88 zum Blockieren oder Freigeben des Flusses durch den Kanal 88 angeordnet. Bedarfsweise kann der Laufrinnensperreinsatz 52a in einem der Versorgungskanäle 86 angeordnet sein.

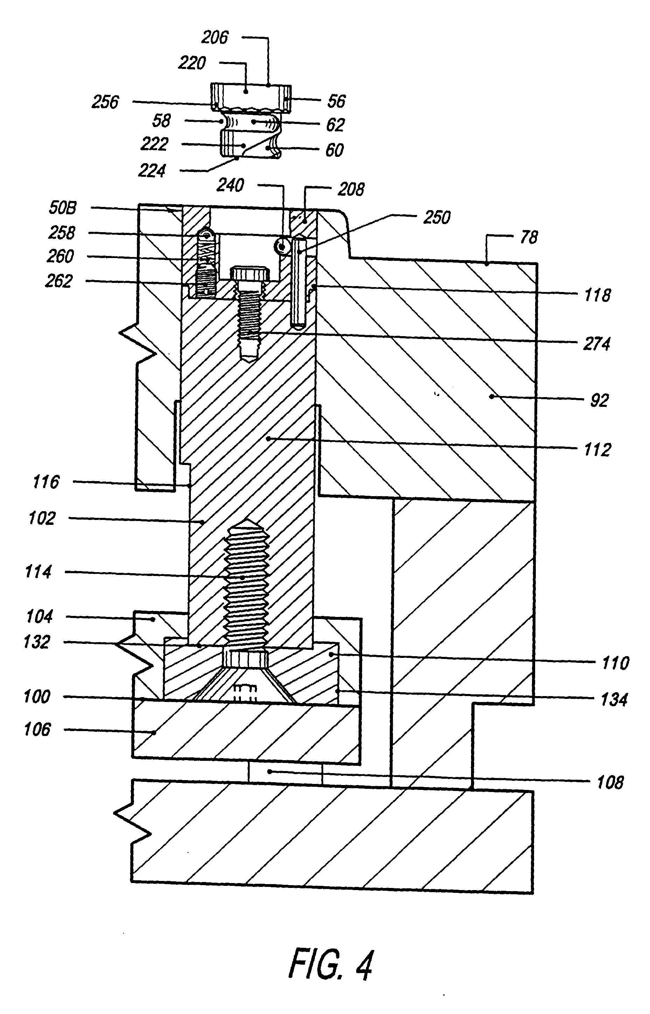

Unter Bezugnahme auf die Figuren 2 und 4 hat die Form 40 einen Körper 92, der eine Oberfläche 78 der oberen Formhälfte trägt, eine untere Aufspannplattenbasis 94 und ein Paar auf der Basis 94 abgestützte Steiger 96 (Seitenwände), die wiederum den Formkörper 92 abstützen. Der Formkörper 92, die Seitenwände 96 und die Basis 94 begrenzen eine Ausdrückkammer 98, in welcher eine Ausdrückplatteneinrichtung 100 angeordnet ist. Die Ausdrückpallteneinrichtung 100 ist an wenigstens einen Ausdrückstift 102 der Erfindung gekoppelt.

Mit Bezugnahme auf Fig. 2 hat die Ausdrückplatteneinrichtung 100 eine obere Ausdrückplatte 104 und eine untere Aufspannplatte 106, die miteinander befestigt sind und ein Ende jedes der Ausdrückstifte 102 umschließen, derart, daß sich jeder Ausdrückstift 102 im wesentlichen zusammen mit den Platten 104 und 106 bewegt. Das gegenüber liegende Ende jedes Ausdrückstiftes 102 ist teleskopisch gleitfähig in einer Bohrung in dem Formkörper 92 aufgenommen. Fig. 3 zeigt einen herkömmlichen Ausdrückstift 103 in einstückiger, einheitlicher Konstruktion. Ein Paar von in Abstand zueinander liegender Stopper 108 sind in Fig. 2 dargestellt, die in der Kammer 98 von der Basis 94 getragen werden, um die Aufspannplatte 106 daran zu hindern, direkt auf den Boden der Basis 94 zu stoßen.

Die Platten 104 und 106 sind vorzugsweise mit einer Krafteinrichtung verbunden, die ein Hubelement oder ein Zylinder, wie ein Hydraulikzylinder oder Gaszylinder (nicht dargestellt), sein kann. Während des Betriebes werden die Platten 104 und 106 und die Stifte 102 angehoben, nachdem das Material 53 in dem Formhohlraum in Verbindung mit dem Stift oder den Stiften genügend gehärtet ist. Wenn die Stifte angehoben werden, stützt sich das freie Ende jedes Stiftes an dem gehärteten Material 53 in der Form ab, um dieses aus der Form zu drücken, so daß es entnommen werden kann.

Die in den Zeichnungen dargestellte Form 40 ist eine beispielhafte Form. Die hier offenbarten neuen Einsätze 50 und 52, Drehmechanismen 54 und 66 und Eindrückstifte 102 sind dazu geeignet, auch mit anderen Formkonfigurationen, mit anderen Formtypen und bei anderen Arten der Formgebung verwendet zu werden.

### Ausdrückstift

Wie in Fig. 2 dargestellt, ist einer der Einsätze an dem Ende 118 jedes Ausdrückstiftes 102 angebracht. Selbstverständlich kann der Ausdrückstift 102 dieser Erfindung auch ohne Einsatz verwendet werden.

Jeder Stift 102 ist aus einem festen und elastischen Material konstruiert, das Metall, ein Verbundwerkstoff, ein Polymermaterial, ein aushärthares Material oder ein anderes geeignetes Material sein kann. Vorzugsweise ist jeder Stift 102 aus Stahl konstruiert, der vorzugsweise ein Edelstahl ist, wie beispielsweise ein oberflächengehärteter H13-Stahl oder dergleichen.

Wie in Fig. 2 gezeigt ist hat jeder Stift 102 dieser Erfindung an einem Ende einen Kopf 110, der an einem Langzylinder 112 angebracht ist. Der Kopf 110 ist vorzugsweise an dem Zylinder 112 durch ein Befestigungselement 114 angebracht, wie einer Schraube oder einem Bolzen, das sich durch eine Bohrung 126 hindurch in den Kopf erstreckt und das in einer Gewindebohrung 128 in dem Ende 120 des Zylinders 112 eingeschraubt ist.

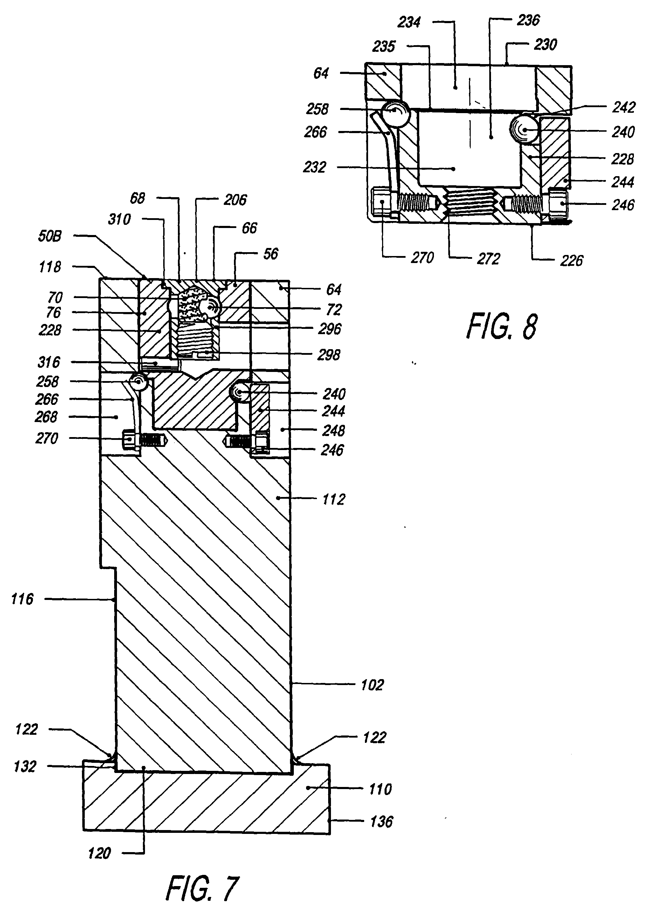

Zum Beispiel kann das Befestigungselement 114 eine Kopfschraube, eine Stellschraube, eine Maschinenachraube oder dergleichen sein. Bedarfsweise kann der Kopf 110 unter Verwendung einer anderen Art von Befestigungselement oder Befestigungsverfahren angebracht sein. Zum Beispiel kann ein Befestigungselement, das ein Haftmittel ist, wie beispielsweise ein Klebstoff, ein Lötmittel oder ein anderes haftendes Material, dazu verwendet werden, den Kopf 110 an dem Zylinder 112 anzubringen. Bedarfsweise kann der Kopf 110 an dem Zylinder 112 durch ein anderes Befestigungselement, das eine Schweißstelle 122 (Fig. 7) ist sein. Solch eine Schweißstelle 112, kann unter Verwendung jedes geeigneten Schweißverfahrens einschließlich dem Lichtbogenschweißen, Reibungsschweißen, Schwungradreibschweißen, Reibungsschweißen, Laserschweißen, Elektronenstrahlschweißen oder dergleichen, erzeugt werden. Bedarfsweise kann der Kopf 110 an dem Zylinder 112 durch Reibungssitz, Preßsitz oder dergleichen befestigt sein.

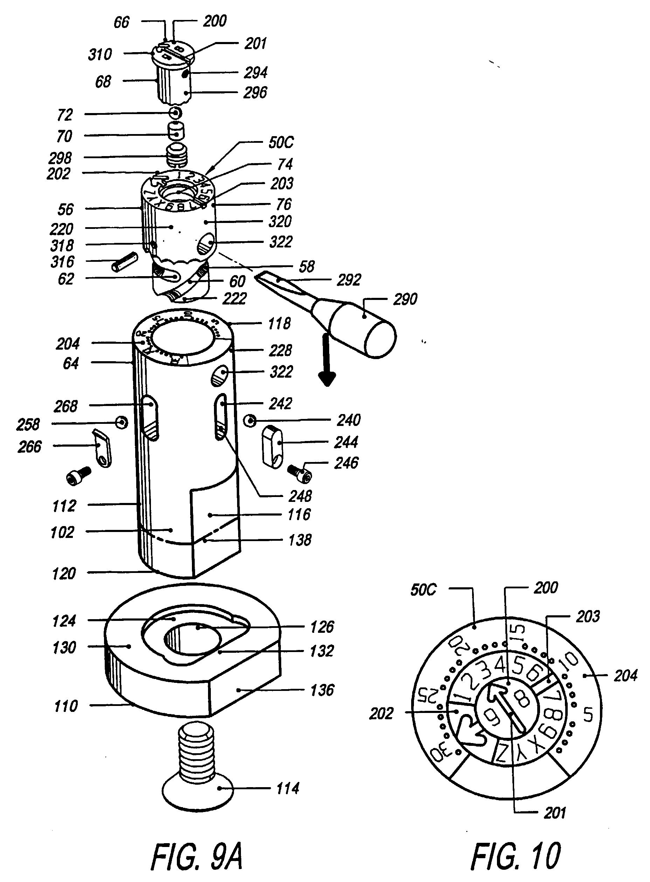

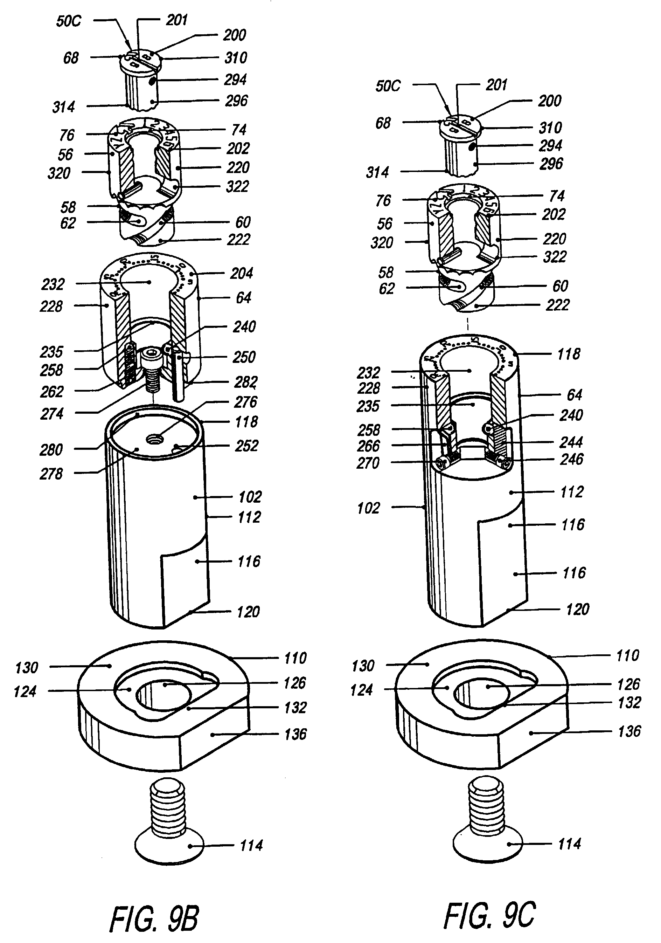

Unter Bezugnahme auf Fig. 9A hat der Zylinder 112 des Stiftes 102 vorzugsweise eine Positioniereintiefung 116 an seinem Ende 120 gegenüber seinem freien Ende 118. Der Kopf 110 hat einen ausgesparten Boden 124, der wiederum eine stehende Seitenwand 130 begrenzt, die im wesentlichen komplementär zur Form des Querschnitts des Zylinderendes 120 ist. In der in den Zeichnungen 4, 11 und 15 gezeigten Ausführungsform erstreckt sich z. B. die Bohrung 126 im Kopf 110 vollständig durch den Kopf 110 hindurch. Um das Befestigungselement 114 gewindemäßig aufzunehmen, ist die Bohrung 128 in dem Ende 120 des Zylinders 112 vorzugsweise innen mit einem Gewinde versehen, kann aber gewindefrei sein, oder sich radial nach innen erstreckende axiale oder radiale Rippen oder dergleichen haben.

Die Seitenwand 130 um den ausgesparten Boden 124 herum hat einen Positionierer 132, an welchem der Positionierer 116 des Zylinders 112 anliegt, wenn der Zylinder 112 in den ausgesparten Boden 124 eingeführt ist. Vorzugsweise ist der Positionierer 132 ein Flachstück in einem inneren radialen Abschnitt der Seitenwand 130.

Wenn der Zylinder 112 auf den Kopf 110 aufgesetzt ist paßt der Positionierer 116 des Zylinders 112 mit dem Positionierer 132 des Kopfes 110 zusammen. Die Positionierer 116 und 132 und der ausgesparte Boden 130 helfen dabei, den Zylinder 112 auf dem Kopf 110 radial zu zentrieren. Die Positionierer 116 und 132 helfen auch dabei, den Zylinder 112 in Bezug zum Kopf 110 umfangsmäßig zu positionieren, so daß die axial äußerste Oberfläche eines an dem Zylinder 112 angebrachten Einsatzes relativ zum Formhohlraum, innerhalb welcher sie aufgenommen ist, wie gewünscht positioniert oder orientiert ist. Die Positionierer 116 und 132 verhindern darüber hinaus eine relative Drehung zwischen dem Kopf 110 und dem Zylinder 112, so daß der Einsatz seine gewünschte Winkelstellung oder Orientierung während des Formbetriebes beibehält.

Wenn der Zusammenbau beendet ist, bilden der Kopf 110 und der Zylinder 112 einen Ausdrückstift 102 dieser Erfindung, der sich wie ein Stift 103 (Fig. 3) in einstückiger, integrierter und einheitlicher Bauweise verhält. Wenn der Zusammenbau abgeschlossen ist, bilden der Kopf 110 und der Zylinder 112 einen Stift 102 dieser Erfindung, der vorteilhafterweise wie ein Stift 103 in einstückiger Bauweise funktioniert.

Wie in den Figuren 2 und 4 dargestellt ist ist der Kopf 110 jedes Stiftes 102 zwischen der oberen Ausdrückplatte 104 und der unteren Ausdrückplatte bzw. unteren Aufspannplatte 106 gefangen. Die obere Ausdrückplatte 104 hat eine Aussparung komplementär zur Form des Kopfes 110, um den Kopf 110 aufzunehmen und zu positionieren. Die obere Platte 104 hat zudem eine Bohrung, durch welche der Zylinder 112 des Stiftes 102 vorsteht. Die obere Plane 104 umfaßt auch einen Positionierer 134, der mit einem äußeren Positionierer 136 des Stiftkopfes 110 zusammen paßt. Vorzugsweise ist der äußere Positionierer 136 ein Flachteil im Äußeren der Seitenwand 130. Vorzugsweise ist der Positionierer 134 in der Ausdrückplatte 104 ein Flachteil, das dem Positionierer 136 komplementär ist.

Wenn der Stift 102 zwischen den Ausdrückplatten 104 und 106 eingesetzt ist bewegt sich dieser gemeinsam mit den Platten 104 und 106. Als Ergebnis des Zusammenwirkens der Positionierer 134 und 136 dreht sich der Stift 102 während des Betriebs nicht in bezug zu den Platten 104 und 106 oder zur Form 40. Durch diese vorteilhafte Konstruktion kann auch der Stift 102, und somit auch ein von dem Stift 102 getragener Einsatz 50, nicht drehen und hält somit die Winkelstellung jedes von dem Stift 102 getragenen Einsatzes 50 bei.

In Bezug auf Fig. 9A kann der Zylinder 112 des Stiftes 102 zugeschnitten werden, wie entlang der Phantomlinie 138, um an die Form 40, in welche er einzubauen ist, angepaßt zu werden. Dadurch kann der Zylinder 112 des Stiftes 102 eine Standardlänge haben, die auf die gewünschte Länge der Art oder Größe einer Form zugeschnitten werden kann, in welcher dieser eingebaut werden soll. Wie in Fig. 9A dargestellt, ist selbstverständlich die gewünschte Länge des Stiftes 102, die durch die Phantomlinie 138 angezeigt ist, typischerweise kürzer als die Standard-Zylinderlänge.

In dieser Weise kann der Ausdrückstift 102 der vorliegenden Erfindung aus Komponenten in Standardlänge und -größe zusammengebaut werden und dann vor seinem Einbau in die Form auf die von der spezifischen Form, in welche dieser eingebaut werden soll, angeforderte Länge zugeschnitten werden. Dies kann vor dem Versenden oder nach dem Versenden des Stiftes 102 durch einen Endverbraucher durchgeführt werden. Ein Beispiel eines solchen Endverbrauchers kann ein Formhersteller oder ein Benutzer- oder Betreiber der Form sein.

Dies ermöglicht auch, daß ein Stift 102 mit einem Einsatz 50 als eine Einheit hergestellt wird, wie in den Figuren 2, 3 und 7 dargestellt ist bevor sie in eine Form 40 eingebaut wird. Selbst mit einem Einsatz 50 kann der Zylinder 112 entweder von einem Formhersteller oder einem Betreiber oder Benutzer der Form zugeschnitten werden. Damit der Stift 102 mit Formen von unterschiedlichen Typen und Größen verwendet werden kann, ist die Positioniereroberfläche 116 vorzugsweise wenigstens etwa 2 Inch lang. Für Stifte 102 mit einem Durchmesser von wenigstens etwa ¼ Inch ist die Positioniereroberfläche 116 sogar länger und vorzugsweise wenigstens etwa 4 Inch lang.

Der Zylinder 112 kann in jeder Weise zugeschnitten werden. Zum Beispiel kann ein Abrasivschneideverfahren verwendet werden, wie beispielsweise ein Säge-, ein Drahterrodier-, ein Drehbank- oder anderes Schneideverfahren, verwendet werden. Bedarfsweise kann ein Laserverfahren oder ein autogenes Brennachneideverfahren oder dergleichen verwendet werden. Bedarfsweise kann ein anderes, nicht-abrasives Schneideverfahren oder Materialentfernungsverfahren verwendet werden. Vorzugsweise wird der Zylinder 112 derart zugeschnitten, daß das Schnittende im wesentlichen flach ist so daß die Achse des Zylinders 112 im wesentlichen rechtwinklig zur Längsrichtung des Kopfes 110 liegt, wenn dieser daran angesetzt ist. Vorzugsweise ist der Zylinder 112 derart zugeschnitten, daß sein Ende im wesentlichen winkelrecht mit dem Kopf 110 ist.

In einer bevorzugten Ausführungsform wird die gewünschte Länge des Stiftes 102 bestimmt und wird der Zylinder 112 mit einer Schnittlinie 138 markiert, derart, daß der Stift 102 die gewünschte Länge hat, wenn da Kopf 110 angesetzt wird. Anschließend wird der Zylinder 112 an der markierten Schnittlinie 138 abgeschnitten. Nachdem da Schneidevorgang abgeschlossen ist wird der Kopf 110 an den Zylinder 112 angebracht und somit der Stift 102 gebildet. Nachdem der Stift 102 zusammengebaut worden ist, wird der Stift 102 in der Form 40 derart installiert, daß der Stift 102 durch eine Ausdrückplatteneinheit gefangen ist. Vorzugsweise wird der Stift 102 derart zusammengebaut, daß sein Kopf 110 durch die Ausdrückplatteneinheit 100 gefangen ist.

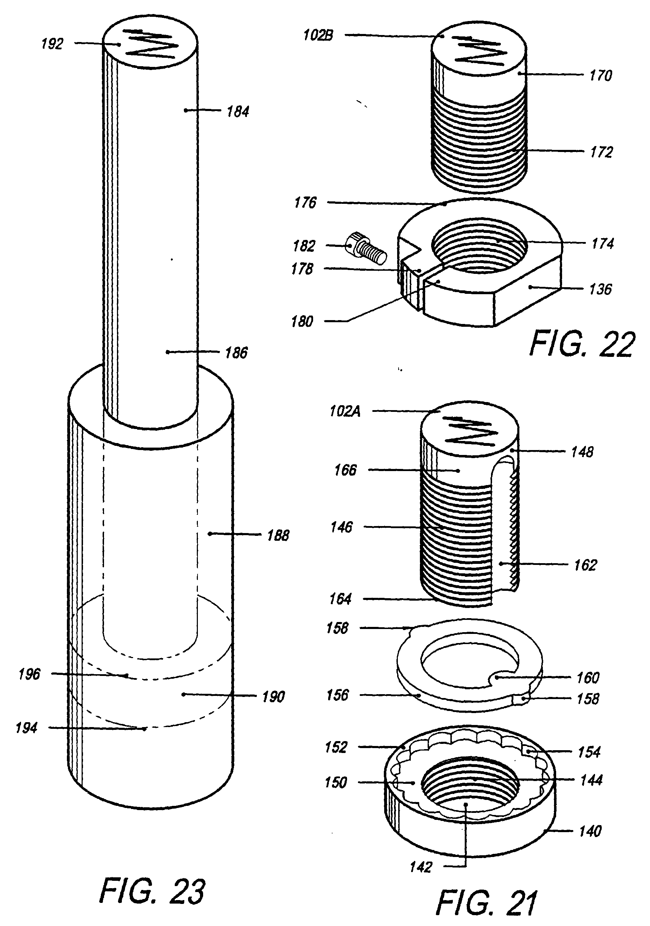

Eine weitere bevorzugte Ausführungsform eines Ausdrückstiftes 102a (Fig. 21) wird einschließlich seines Kopfes 140, Zylinders 148 und in einer neuen Montageanordnung in Fig. 21 gezeigt. Der Kopf 140 hat eine Bohrung 142 mit Innengewinde 144 zum Aufnehmen und Gewindeeingriff eines Gewindeabschnitts 146 des Zylinders 148, welcher am Ende des Zylinders 148 liegt. In Fig. 21 ist nur ein Abschnitt des Zylinders 148 dargestellt. Der Kopf 140 hat eine sich axial nach innen erstreckende Aussparung bzw. Gegenbohrung 150, die durch eine stehende Seitenwand 152 begrenzt ist, und zum Zylinder 148 hin gerichtet ist wenn der Zylinder 148 an dem Kopf 140 angebracht ist. Die radial innen liegende Oberfläche der Seitenwand 152 hat eine Mehrzahl von im wesentlichen bogenförmigen Kerbenpaaren 154, die einen bogenförmig gekerbten (gerasteten) radialen Innenumfang bilden.

Ein Kupplungsring 146 wird dazu verwendet den Zylinder 148 an den Kopf 140 zu koppeln, derart, daß es zwischen dem Zylinder 148 und dem Kopf 140 keine relative Drehung gibt. Der Ring 156 wird in der Gegenbohrung 150 im Kopf 140 aufgenommen. Der Ring 156 hat ein Paar sich radial nach außen erstreckender, umfänglich in Abstand liegender und vorzugsweise bogenförmiger Vorsprünge 148, die jeweils in einer der Kerben 154 (Rasten) aufgenommen sind und dadurch den Ring 156 daran hindern, sich relativ zum Kopf 140 zu bewegen. Der bogenförmige Positioniervorsprung 160, der sich von dem Ring 156 radial nach innen ausdehnt, ist in einer sich radial nach innen erstreckenden Positioniernut 162 aufgenommen, die sich axial wenigstens über einen Abschnitt der Länge des Zylinders 148 erstreckt. Wie in Fig. 21 dargestellt ist, erstreckt sich die Nut 162 axial von dem Gewindeende 164 des Zylinders 148 aus in Richtung zum entgegengesetzten Ende. Damit der Zylinder 148 eine ausreichende Länge hat, um auf eine breite Vielzahl von Längen zugeschnitten werden zu können, ist die Nut 162 lang und endet vorzugsweise axial hinter dem Gewindeabschnitt 146 an einem gewindefreien Abschnitt 166 des Zylinders 148. Bedarfsweise kann der Ring 156 eine Ringscheibe sein.

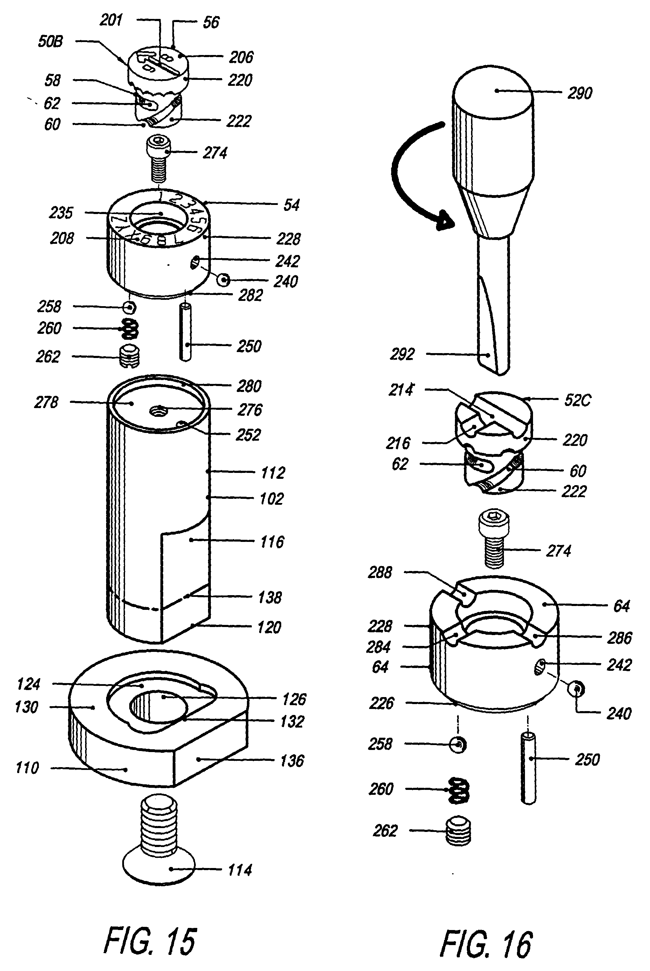

Bei der Benutzung wird, nachdem der Zylinder 148 auf die Länge zugeschnitten wurde, der Ring 156 über dem Gewindeende 146 des Zylinders 148 plaziert und wird der Zylinder 148 in den Kopf 140 geschraubt. Wenn der Zylinder 149 ausreichend tief in den Kopf 140 eingeschraubt worden ist, wird der Ring 156 axial gegen den Kopf 140 gedrückt, bis der Ring 156 in der Aussparung 150 aufgenommen ist, derart, daß seine Positionierer 158 in den Positioniererkerben 154 im Kopf 140 aufgenommen sind. Wenn der Ring 156 in der Aussparung 150 aufgenommen ist, funktioniert er als Sperrmechanismus, um den Zylinder 148 daran zu hindern, sich relativ zum Kopf 140 zu drehen. Damit sowohl der Kopf 140 als auch der Zylinder 148 sich nicht relativ zu der Ausdrückplatteneinheit 100 drehen, kann der Kopf 140 einen Positionierer haben, wie beispielsweise die in Fig. 15 gezeigte Positionierfläche 136.

Fig. 22 zeigt eine weitere bevorzugte Ausführungsform eines Ausdrückstiftes 102b. Der Zylinder 170 hat einen Gewindeabschnitt 172 an einem Ende, das in eine Gewindebohrung 174 im Kopf 176 geschraubt ist. Der Kopf 176 ist im wesentlichen U-förmig und umfaßt ein Schenkelpaar 178 und 180, das durch ein Befestigungselement 182, welches die Arme 178 und 189 miteinander verbindet, um den Gewindeabschnitt 172 herum geklemmt ist. Vorzugsweise erstreckt sich das Befestigungselement 182 durch eine Bohrung in einem der Schenkel 178 hindurch in eine Gewindebohrung des anderen Schenkels 180.

Fig. 23 stellt einen neuartigen Rohling 184 für einen Ausdrückstift dar, aus welchem ein Ausdrückstift 103 (Fig. 3) in einstückiger und einheitlicher Bauweise hergestellt wird. Der Rohling 184 umfaßt einen gehärteten Zylinderabschnitt 186 und einen ungehärteten Abschnitt 188, der auf die gewünschte Länge zugeschnitten werden kann und auf einer Drehbank drehbearbeitet werden kann, um einen Kopf 190 für einen Ausdrückstift zu formen (in Phantomlinien dargestellt). Der Ausdrückstift-Rohling 184 wird vorzugsweise im wesentlichen in der in Fig. 23 gezeigten Form an einen Endverbraucher übersandt, wie einem Formbetreiber oder dergleichen, welcher die Herstellung des Ausdrückstiftes durch ein größenabhängiges Zuschneiden des ungehärteten Abschnitts 188 und ein anschließendes Drehen desselben zur Formung des Körpers 190 vervollständigen kann. Bedarfsweise kann der ungehärtete Abschnitt 188 im wesentlichen gleichzeitig mit seiner Drehbearbeitung auf Größe geschnitten werden.

Zum Beispiel kann bei dem in Fig. 23 gezeigten Rohling ein Abschnitt des Endes des Stabstahls auf die Phantomlinie 194 zugeschnitten oder auf die Phantomlinie 194 drehbearbeitet werden. Wenn ein Drehbearbeiten des Kopfes 190 abgeschlossen ist, führt dies zu einem Ausdrückstift 103 in einstückiger und einheitlicher Bauweise, wie dem in Fig. 3 gezeigten Ausdrückstift 103, mit einer Länge, die für die Form geeignet ist, in welcher er eingebaut werden soll.

In einem Verfahren zum Herstellen des Rohlings 184 wird ein Stabmaterial aus einem Metall oder einem anderen maschinenbearbeitbaren Material maschinell bearbeitet, um einen abgestuften Abschnitt 186 mit einem geringeren Durchmesser als demjenigen des Stabmaterials und den ungehärteten Abschnitt 188 zu bilden. Vorzugsweise wird das Stabmaterial durch Drehen auf einer Drehbank maschinell bearbeitet oder unter Verwendung eines anderen Materialentfernungsverfahrens, um den abgestuften Abschnitt 186 zu bilden. Anschließend wird der abgestufte Abschnitt 186 vorzugsweise gehärtet, wie beispielsweise durch ein Nitrierhärten oder ein anderes Oberflächenhärtungsverfahren, derart daß das Äußere des Abschnitts 186 um seinen Umfang vom Ende 192 des Rohling 184 im wesentlichen bis zu dem ungehärteten Abschnitt 188 gehärtet ist. Der im Durchmesser abgestufte Abschnitt 186 ist auf eine Tiefe gehärtet von wenigstens etwa einem Mikrometer und höchstens 100 Mikrometer um den Umfang des Stiftzylinders herum, um eine Abnutzung des Stiftes 103 zu verringern, wenn dieser während des Betriebs wiederholt in der Form 40 hin und her bewegt wird.

Der Stabstahl ist vorzugsweise aus einem maschinenbearbeitbaren oder formbaren Material, das zur Verwendung mit einem Ausdrückstift 103 geeignet ist. Ein bevorzugtes Stabstahlmaterial ist eine H13-Stahllegierung, weil diese leicht maschinenbearbeitet oder geformt werden kann und gleichzeitig eine gute Abriebsfestigkeit und - zähigkeit besitzt. Weitere Metalle und Legierungen können verwendet werden.

### Einsatz

### 1. Stempeleindruck-Einsatz

Die Figuren 1, 10, 12 und 14C zeigen drei unterschiedliche beispielhafte und bevorzugte stempeleindrückende Einsätze 50a, 50b und 50c, die von der Form getragen werden und jeweils in einem Formhohlraum angeordnet sind. Dort, wo ein stempeleindrückender Einsatz nicht durch einen Buchstaben a, b oder c bezeichnet wird, ist dieser allgemein mit dem Bezugszeichen 50 bezeichnet. Ein stempeleindrückender Einsatz 50 der vorliegenden Erfindung ist so konstruiert und ausgebildet, daß dieser einen Eindruck seiner äußeren Oberfläche 198 hinterläßt wenn das härtbare Material 53 im Hohlraum gehärtet ist.

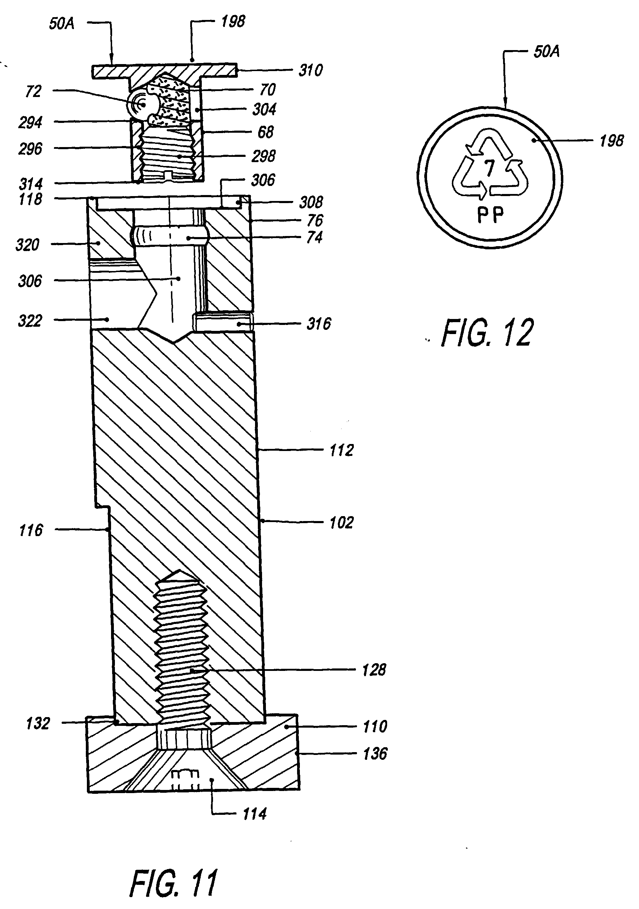

Mit Bezugnahme auf die Figuren 1 und 12 ist ein solcher Einsatz 50a an einem Stift 102 im Hohlraum 42 angebracht und derart konstruiert, daß dieser vorzugsweise nicht dreht. Der Einsatz 50a wird vorzugsweise dazu verwendet den Typ des gerade geformten härtbaren Materials 53 einzudrücken. Zum Beispiel zeigt der Einsatz 50a die Materialnummer 7 für Polypropylen.

Mit Bezugnahme auf die Figuren 1 und 10 ist ein weiterer solcher Einsatz 50c mit einem Stift 102 in dem Hohlraum 42 angebracht, der eine entfernbare, kreisförmig, zentrisch angeordnete, stempeleindrückende und von dem Stopfen 68 getragene Einsatzoberfläche 200 aufweist. Der Stopfen 68 ist in einem Paar von im wesentlichen konzentrischen, stempeleindrückenden Ringen 202 und 204 aufgenommen. Sowohl die zentrale Einsatzfläche 200 als auch der innere Ring 202 können vorzugsweise gedreht werden, sowohl relativ zueinander als auch relativ zum Außenring 204.

Der Einsatz 50c wird dazu verwendet das Datum, den Monat und das Jahr in das gerade geformte haftbare Material 53 einzudrücken. Die zentrale Einsatzfläche 200 drückt das Jahr und einen Pfeil 201 ein, welcher den Monat der Formgebung anzeigt, wobei die Monate durch den inneren Ring 202 eingedrückt werden. Der innere Ring 202 hat auch einen Pfeil 203, der den Tag des Monats anzeigt, wobei die Tage des Monats durch den äußeren Ring 204 eingedrückt werden. Die Pfeile 201 und 203 sind vorzugsweise ausgespart, um so die Spitze eines Schraubendrehers aufnehmen zu können und die Einsatzfläche 200 oder den Ring 202 schnell und leicht drehen zu können.

Mit Bezug auf die Figuren 1, 9A und 14C ist noch ein weiterer solcher Einsatz 50b an dem Stift 102 in einem weiteren Hohlraum 44 angebracht, welcher eine zentrale, kreisförmige, stempeleindrückende, drehbare Einsatzfläche 206 und einen äußeren, stempeleindrückenden Ring 208, der vorzugsweise stationär ist aufweist. Der Einsatz 50b wird dazu verwendet den Monat und das Jahr in das gerade geformte härtbare Material 53 einzudrücken.

Jeder der vorerwähnten Einsätze 50 drückt einen spezifischen Stempel ein. Andere Einsätze 50 sind möglich, die in den Schutzbereich der Erfindung fallen, einschließlich Einsätze, die Mitteilungen, Bilder, Markensymbole, Marken, Handelsnamen, Modellnummern, Teilenummern, Herstellungszeitpunkt, Verfallzeit und andere Mitteilungen, Symbole oder Funktionen eindrücken.

Jeder Einsatz 50 wird vorzugsweise von einem Eindrückstift 102 oder 103 getragen. Wenn jedoch der Einsatz 50 einen drehbaren Abschnitt aufweist, muß dieser nicht von einem Eindrückstift 102 getragen werden, sondern kann in dem Formhohlraum sitzen, vorzugsweise in einer Tasche in dem Hohlraum.

### 2. Hauptkanal-Sperreinsatz

Die Figuren 1 und 5 zeigen einen Hauptkanal-Sperreinsatz 52a. Der Einsatz 52a hat einen Kanal 210 seiner äußeren Oberfläche 212 und ist so konstruiert und ausgebildet, daß er den Fluß eines härtbaren Material 53 aus einem stromaufwärts liegenden Abschnitt eines Zuführkanals 88 zu einem stromabwärts liegenden Abschnitt des Kanals 88 steuert. Der Einsatz 52a kann zu einer ersten Position gedreht werden, gezeigt in Fig. 1, die den Fluß zu einem der Formhohlräume 46 blockiert, indem der Fluß durch den Zuführkanal 88 blockiert wird. Der Einsatz 52a kann in eine zweite Position gedreht werden, in welcher der Kanal 210 mit dem Zuführkanal 88 ausgerichtet ist um einen Fluß durch den Formhohlraum 46 zu erlauben. Vorzugsweise wird der Einsatz 52a um etwa 90° gedreht um sich zwischen der ersten Position, das heißt, einer geschlossenen Position, und der zweiten Position, das heißt, einer offenen Position, zu bewegen.

### 3. Fluß-Lenkeinsatz

Die Figuren 1 und 16-20 zeigen Fluß-Lenkeinsätze 52b und 52c zum Steuern eines Flusses des härtbaren Materials 53 in einen einzelnen Formhohlraum 48, in ein Paar von Hohlräumen 42 und 44 oder in mehr als zwei Hohlräume. Der Einsatz 52b und 52c hat ein Paar in einem Winkel zueinander angeordnete Kanäle 214 und 216, die zwischen einer Mehrzahl von Positionen gedreht werden können, um den Fluß in einen oder mehrere Formhohlräume zu lenken oder den Fluß zu jedem Hohlraum vollständig zu blockieren.

In einem bevorzugten Einsatz 52b hat der Einsatz 52b einen Kanal 214, der in etwa um einen Winkel von 90° relativ zu dem anderen Kanal 216 angeordnet ist. Mit Bezug auf Fig. 1 hat der Einsatz 52b eine erste Position, eine offene Position, in welcher einer der Kanäle 216 im wesentlichen mit dem Versorgungskanal 86 ausgerichtet ist und der andere der Kanäle 214 mit dem Zuführkanal 88 ausgerichtet ist, der sich zu dem Hohlraum 48 erstreckt, um einen Fluß des härtbaren Materials 53 in den Hohlraum 48 zu erlauben. Wenn der Einsatz 52b von der Öffnungsposition weggedreht wird, wie in der in Fig. 3 gezeigten Schließposition, sind die Kanäle 214 oder 216 nicht weiter mit den Kanälen 86 und 88 ausgerichtet, und ein Fluß zum Hohlraum 48 ist blockiert. Bedarfsweise kann der Einsatz 52b an spezifischen Winkelstellungen eingerasten, wie etwa bei 90° zum Beispiel, derart, daß der Einsatz 52b um 90° zwischen seiner einen Fluß gestattenden Öffnungsposition und einer den Fluß blockierenden Schließposition, die von der Öffnungsposition entfernt liegt, um etwa 90° gedreht werden kann.

In einem weiteren bevorzugten Einsatz 52c, der in den Figuren 1, 3 und 16 gezeigt ist, hat der Einsatz ein Paar von Kanälen 214 und 216, die in T-Form angeordnet und zur Steuerung des Flusses zu einem Paar von Hohlräumen 42 und 44 hin geeignet ist. Der erste Kanal 214 erstreckt sich über die Länge des Einsatzes 52c, und der zweite Einsatz 216 ist einem Winkel in Bezug zu dem ersten Kanal 214 angeordnet und schneidet den Kanal 214. Vorzugsweise ist der zweite Kanal 216 in einem Winkel von etwa 90° in Bezug zum ersten Kanal 216 angeordnet.

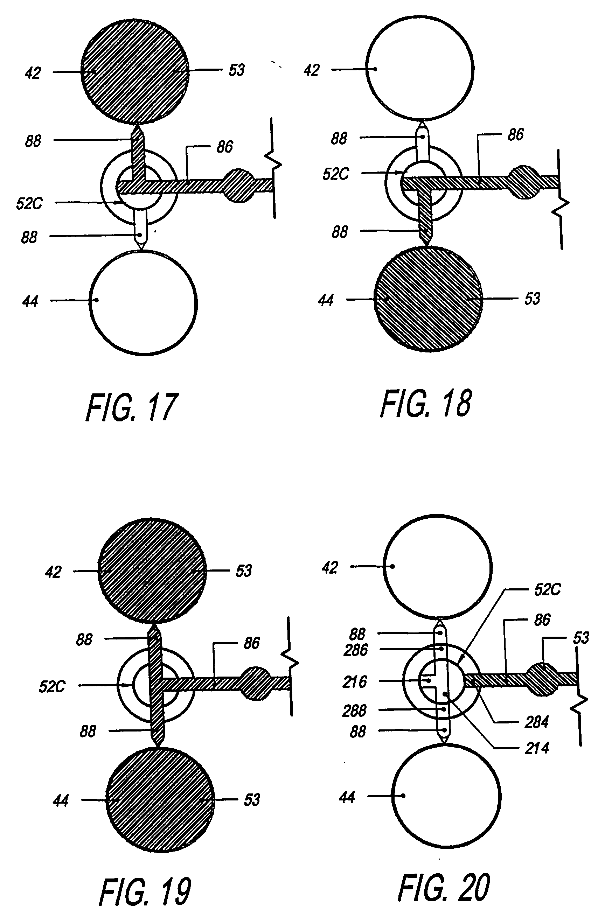

Mit Bezug auf Fig. 16 hat auch das Lagerteil 64' Kanäle 284, 286 und 288. Mit Bezug auf Fig. 20 ist der Kanal 284 mit dem Kanal 86 ausgerichtet, ist der Kanal 286 mit dem Kanal 88 ausgerichtet und ist der Kanal 288 mit dem Kanal 88 ausgerichtet.

Mit Bezug auf die Figuren 17-20 kann der Einsatz 52c in einer Mehrzahl von Positionen angeordnet sein, um den Fluß des Materials 53 zu entweder einem oder beiden Hohlräumen 42 und 44 zu lenken. Fig. 17 zeigt den Einsatz 52c, wie er in einer ersten Position angeordnet ist, um den Fluß in den einen Hohlraum 42 zu lenken. Fig. 18 zeigt den Einsatz 52c, wie er in einer zweiten Position angeordnet ist, um den Fluß in den anderen Hohlraum 44 zu lenken. Fig. 19 zeigt den Einsatz 52c in einer dritten Position, in der dieser den Fluß in beide hohlräume 42 und 44 lenkt. Fig. 20 zeigt den Einsatz 52c in einer vierten Position, in der dieser den Fluß zu beiden Hohlräumen 42 und 44 blockiert. Vorzugsweise ist der Einsatz 52c in Winkelschritten von etwa 90° einrastbar.

Obwohl zwei Hohlräume 42 und 44 dargestellt sind, kann der Einsatz 52 so konstruiert sein, daß dieser den Fluß bedarfsweise in mehr als zwei Hohlräume verteilt. Natürlich würde ein solcher Einsatz 52 dann auch mehr als vier Positionen einnehmen können.

Mit Bezug auf Fig. 16 greift ein Werkzeug 290 in den Einsatz ein und wird bei geöffneter Form 40 manuell gedreht, um einen der Einsätze 52a, 52b und 52c zu drehen. Vorzugsweise ist das Werkzeug 290 ein Schraubendreher. Vorzugsweise wird die Spitze 292 des Schraubendrehers 290 in einem der Kanäle, wie beispielsweise Kanal 214, in dem Einsatz aufgenommen und werden der Schraubendreher 290 und der Einsatz gemeinsam gedreht.

### Drehmechanismus

Jeder Einsatz 50 und 52 kann von einem Drehmechanismus 54 oder 66 der vorliegenden Erfindung getragen werden. Der Drehmechanismus 54 oder 66 kann einfach konstruiert sein, um dem Einsatz 50 oder 52 zu gestatten, sich zu drehen und in einer beliebigen Winkelposition, zwischen beliebigen Grenzwerten der Drehung, die der Drehmechanismus 54 oder 66 besitzt, positioniert zu werden. Vorzugsweise ist der Drehmechanismus 54 oder 66 so konstruiert, daß dieser dem Einsatz 50 oder 52 gestattet, zwischen einer endlichen Anzahl von Positionen wahlweise gedreht oder in Raststellung gebracht zu werden.

### 1. Erste bevorzugte Ausführungsform

Die Figuren 2-6 zeigen einen ersten bevorzugten Drehmechanismus 54 zum drehbaren Aufnehmen eines Einsatzes, wie die vorerwähnten stempeleindrückenden Einsätze 50a, 50b oder 50c, den Hauptfluß-Sperreinsatz 52a, den Fluß-Lenkeinsatz 52b oder 52c oder einen anderen Einsatz. Der Einsatz ist an dem Stopfen 56 angebracht oder einstückig mit diesem ausgebildet, der in dem hülsenartigen Lagerteil 64 aufgenommen ist. Das Lagerteil 64 ist entweder einstückig mit der Form 40 oder dem Ausdrückstift 102 ausgebildet oder ist ein separates Lagerteil 64', wie es in den Figuren 3 und 9B dargestellt ist, das an einem Ende des Stiftes 102 angebracht ist oder in einer Tasche 218 in der Form 40 aufgenommen ist.

Mit Bezug auf die Figuren 4 und 5 hat der Stopfen 56 einen Kopf 220, der größer als der Stopfenkörper oder Schaft 222 ist. Der Stopfenkörper oder Schaft 222 hat eine Nut bzw. einen Gewindegang 58, der sich um den Umfang des Körpers 222 herum erstreckt. Wie in Fig. 6 in größerem Detail dargestellt ist, ist die Nut 58 an einem Ende 61 offen, um dem Stopfen 56, dem Positionierer bzw. der Führung 240, der/die durch das Lagerteil 64 bzw. 64' getragen wird, den Eingang zu erleichtern, so daß der Stopfen 56 schnell und leicht in das Lagerteil 64 oder 64' eingeführt werden kann. Umgekehrt erleichtert diese Konstruktion auch, daß der Stopfen 56 schnell und leicht aus dem Lagerteil 64 oder 64' entfernt werden kann.

Ein Eingangsweg-Abschnitt 60 der Nut 58 ist in einem spitzen Winkel in Bezug zu einem Abschnitt 62 der Nut 58 angeordnet der im wesentlichen quer zur Längsrichtung des Stopfens 56 verläuft. Vorzugsweise ist der Eingangsweg-Nutabschnitt 60 im wesentlichen schraubenförmig. Die Öffnung 61 im Eingangs-Nutabschnitt 60 erlaubt dem Stopfen 56, durch das Lagerteil 64 bzw. 64' fest aufgenommen und zurückgehalten zu werden. Der Eingangsweg 60 erstreckt sich in einer Richtung zu einem axialen Ende 224 des Körpers 222, wo seine Öffnung 61 so ausgebildet ist, daß sie die Führung 240 annimmt. Der Eingangsweg-Nutabschnitt 60 erstreckt sich in einer entgegengesetzten Richtung zu dem quer verlaufenden Nutabschnitt 62. Der Nutabschnitt 62 hat eine Endwand 63, die als ein Anschlag fungiert, um die Drehung des Stopfens 56 zu begrenzen.

Vorzugsweise ist die Nut 58 wenigstens etwa 0,040 Inch breit und wenigstens etwa 0,020 Inch tief, um so eine Kugel 240 von wenigstens etwa 0,076 Inch Durchmesser derart anzunehmen, daß der Stopfen 56 während des Betriebs in dem Lagerteil 64 bzw. 64' zurückgehalten wird. Der quer verlaufende Abschnitt 62 der Nut 56 erstreckt sich vorzugsweise wenigstens über etwa 250° um den Körper 222 herum, derart, daß der Stopfen um den gleichen Betrag gedreht werden kann, ohne sich dabei relativ zum Lagerteil zu verschieben. Der quer verlaufende Abschnitt 62 erstreckt sich vorzugsweise um nicht mehr als etwa 330° um den Körper 222 herum.

Der Nut-Eingangsabschnitt 60 ist in Bezug zum quer verlaufenden Nutabschnitt 62 spitz angewinkelt. Mit Bezug auf Fig. 6 ist der Nut-Eingangsabschnitt 60 mit einem Winkel α von etwa 30° in Bezug zu dem quer verlaufenden Nutabscbnitt 62 angewinkelt, um den Winkelbereich der Drehung des Stopfens zu maximieren. Vorzugsweise ist der Nut-Eingangsabschnitt 60 in einem Winkel α von nicht größer als etwa 45° und wenigstens etwa 20° angewinkelt. Vorzugsweise erstreckt sich der Nut-Eingangsweg 60 zwischen etwa 40 °und etwa 60 °des Stopfenkörpers 222. Vorzugsweise erstreckt sich der Eingangsweg 60 und der quer verlaufende Abschnitt 52 über wenigstens etwa zwei Drittel eines Umfangs um den Körper 222 herum und um nicht mehr als etwa 300 °um den Körper 222 herum.

Die Nut 58 umfaßt vorzugsweise einen sich radial nach innen erstreckenden Kanal mit einem bogenförmigen, hemisphärischen, dreieckigen, quadratischen oder anderen Profil. In ihrer bevorzugten Ausführungsform umkreist die Nut 58 den Außenumfang des Stopfens 56 nicht mehr als einmal.

Mit Bezug auf Fig. 8 hat das Lagerteil 64 bzw. 64' eine Bodenwand 226, eine Seitenwand 228 und eine Öffnung 230, die einen Hohlraum 232 begrenzen, in welchen der Stopfen 56 aufgenommen ist. Der Hohlraum 232 hat eine im wesentlichen komplementäre Figur zum Stopfen 56, so daß, wenn der Stopfen 56 in den Hohlraum 232 eingeführt ist dessen Oberseite mit der Oberseite des Lagerteils 64 bzw. 64' fluchtet. Der Hohlraum 232 hat einen im Durchmesser größeren Abschnitt 234 zum Aufnehmen des Kopfes 220 des Stopfens 56 und eine Schulter 235, die einen im Durchmesser kleineren Abschnitt 236 zum Aufnehmen des Körpers 222 des Stopfens 56 begrenzt. Das Lagerteil 64 bzw. 64' hat eine sich radial nach innen erstreckende Führung 240, die in der Nut 58 des Stopfens 56 aufgenommen ist, wenn der Stopfen 56 in den Hohlraum 232 eingeführt ist.

Mit Bezug auf Fig. 5 hat die sich nach innen erstreckende Führung 240 vorzugsweise eine Kontur, derart, daß sie in der Nut 58 fest aufgenommen werden kann und den Stopfen 56 in dem Lagerteil 64' bzw. 64 zurückhält. Vorzugsweise kann der Stopfen 56 nicht von dem Lagerteil 64 bzw. 64' abgezogen werden, wenn die Führung 240 in dem quer verlaufenden Nutabschnitt 62 aufgenommen ist. In ihrer bevorzugten Ausführungsform ist die Führung 240 eine Kugel, wie bei einem Kugellager oder dergleichen. Die Seitenwand 228 hat eine Bohrung 242, die sich von dem Äußeren der Seitenwand 228 nach innen in den Hohlraum 232 erstreckt, um die Führungskugel 240 aufzunehmen. Die Breite bzw. der Durchmesser der Bohrung 242 verjüngt sich vorzugsweise wenigstens ein wenig an ihrem Hohlraumende, um die Kugel 240 daran zu hindern, vollständig durch die Bohrung 242 in den Hohlraum 232 hindurch zu gelangen.

Wie in Fig. 8 dargestellt ist ist die Führungskugel 240 in der Bohrung 242 durch eine Kappe 244 gefangen, die durch einen Bolzen oder eine Schraube 246, welche in eine Gewindebohrung in der Seitenwand 228 eingedreht ist, an der Seitenwand 228 angebracht ist. Bedarfsweise kann die Kappe 244 die Kugel 240 in den Hohlraum 232 elastisch vorspannen. Die Kappe 244 ist vorzugsweise in einer Aussparung 248 im äußeren da Seitenwand 228 des Lagerteils aufgenommen.

Mit Bezug auf Fig. 5 kann die Kugel 240 in der Bohrung 242 durch einen sich axial erstreckenden Stift 250 gefangen sein. Der Stift 250 erstreckt sich vorzugsweise von dem Lagerteil 64' nach außen in eine Bohrung in da Form 40 (Fig. 3) oder in eine Bohrung 252 in dem Ausdrückstift 102 (Fig. 4), um den Einsatz und den Drehmechanismus zu positionieren und gleichzeitig auch eine nachteilige Drehung des Einsatzes und des Drehmechanismus während des Betriebs zu verhindern.

Mit Bezug auf Fig. 5 hat eine Bodenschulter 254 des Stopfenkopfes 222 eine Mehrzahl von Anschlagaufnahmen 256, die vorzugsweise umfänglich in Abstand um die Schulter 254 herum liegen, uni dem Stopfen 56 zu ermöglichen, wahlweise während des Betriebs in spezifische Positionen gedreht zu werden. Vorzugsweise umfaßt jede Anschlagaufnahme 256 eine Kerbe, Vertiefung oder Aussehneidung in der Schulter 254. Um zu verhindern, daß sieh der Stopfen 56 aus der gewählten Position weg bewegt, hat das Lagerteil 64 bzw. 64' einen Anschlag 258, der mit einer der Anschlagaufnahmen 256 zusammenwirkt. In einer bevorzugten Ausführungsform der Anschläge umfaßt der Anschlag 258 eine Anschlaganordnung die eine Kugel 258 Umfaßt, welche durch eine Feder 260 in den an die Schulter 235 angrenzenden Hohlraum 232 vorgespannt ist, um eine Drehung des Stopfens 56 in dem Lagerteil 64 bzw. 64' zu erlauben. Vorzugsweise umfaßt die Anschlaganordnung einen Federkolben 262, der in einer Gewindebohrung 264 eingedreht ist, welche sich vorzugsweise axial in der Lagerteil-Seitenwand 228 in den Hohlraum 232 hinein erstreckt. Die Anordnung ist in den Figuren 9B, 15 und 16 in größerem Detail dargestellt.

Mit Bezug auf die Figuren 7,8, 9A und 9C ist eine weitere bevorzugte Anschlaganordnung dargestellt. Die Anschlaganordnung umfaßt eine Blattfeder oder Balkenfeder 256, die in einer Tasche 268 in der Lagerteil-Seitenwand 228 aufgenommen ist, die durch eine Schraube oder einen Bolzen 270 an einem Ausdrückstift 102 oder der Form 40 befestigt ist. Das Blau 266 drückt die Anschlagkugel 258 in den Hohlraum 232, während es sich ein wenig biegt, um die Drehung des Stopfens 56 aufzunehmen, wenn die Position des Stopfens 56 geändert wird. Wie in Fig. 9A dargestellt ist, ist die Anschlaganordnung besonders gut für Ausdrückstifte 102 oder 103 geeignet.

Wenn das Lagerteil 64' nicht einstückig mit einer der Formhohlräume oder mit dem Ausdrückstift 102 ausgebildet ist, hat die Bodenwand 226 des Lagerteils 64' eine Bohrung 272, durch welche sich ein Bolzen 274 erstreckt, der in eine Gewindebohrung 276 (Fig. 15) im Körper eingedreht ist, wie der Ausdrückstift 102, an welchem das Lagerteil 64' angebracht ist. Damit das Lagerteil 64' aus der Tasche, in der es aufgenommen ist, wie z. B. einer Tasche in der Form 40, herausgezogen werden kann, ist der Durchmesser der Bohrung 272 vorzugsweise größer als der Durchmesser des Montagebolzens 274, um einen zweiten Bolzen aufzunehmen, vorzugsweise eine Hebeschraube, die in die Bohrung 272 eingeschraubt ist. Nachdem die Hebeschraube in die Bohrung 272 eingeschraubt ist, drückt sie gegen die Form und drückt diese weg von der Form, so daß sie vollständig aus der Form herausgezogen werden kann. In dieser Weise kann das Lagerteil 64' reibungsmäßig dicht sitzend in eine Tasche in der Form 40, wie in Fig. 3 dargestellt ist oder reibungsmäßig dicht sitzend in eine Tasche in einem anderen Körper eingebracht werden.

Wenn die Montagefläche 278 des Stiftes 102 an einem Ausdrückstift 102 angebracht ist wie in den Figuren 9B und 15 dargestellt, hat sie einen stehenden Flansch 280 um ihren Umfang herum, der an einer komplementären Rippe 282 im Boden des Lagerteils 64' koaxial aufgenommen ist. Der Flansch 280 und die Rippe 282 passen deren zusammen, daß sie das Lagerteil 64' und somit den Einsatz, der an dem in dem Lagerteil 64' aufgenommenen Stopfen 56 angebracht ist positionieren.

Der Stopfen 56 ist aus einem Material hergestellt das dauerhaft elastisch, dicht und vorzugsweise abnutzungsfest ist um den Umgebungsanforderungen einer Form zu widerstehen. Das Lagerteil 64 bzw. 64' ist auch aus einem Material hergestellt das dauerhaft, elastisch, dicht und vorzugsweise abnutzungsfest ist. Der Stopfen 56 ist vorzugsweise aus einem Metall, wie einem H13-Stahl, A2-Stahl, 420-Edelstahl, 440-Edelstahl, 450-Edelstahl oder 455-Edelstahl hergestellt. Vorzugsweise ist der Stopfen 56 aus einem wärmebehandelten Edelstahl, wie einem 420-, 440- oder 455-Edelstahl hergestellt. Bedarfsweise kann der Stopfen 56 aus einem heißfixierten (Thermoset) Material, einem Keramikmaterial, einem Messingmaterial, Aluminium, Kupfer oder einer Legierung hergestellt sein. Das Lagerteil 64 bzw. 64' ist vorzugsweise aus einem Metall, wie einem H13, A2, 420-Edelstahl, 440-Edelstahl, 450-Edelstahl oder 455-Edelstahl hergestellt. Vorzugsweise ist das Lagerteil 64 bzw. 64' aus einem 450-Edelstahl hergestellt. Bedarfsweise kann das Lagerteil 64 bzw. 64' aus einem Thermoset-Material, einem keramischen Material, Messing, Aluminium, Kupfer oder einem Metall oder einer Kompositlegierung hergestellt sein.

### 2. Zweite bevorzugte Ausführungsform

Die Figuren 2, 7, 9A-9C, 11, 13 und 14A-14B zeigen einen zweiten bevorzugten Drehmechanismus 66, der vorzugsweise einen Einsatz trägt, wie z. B. den Einsatz 50 oder 52. Der Einsatz 50 oder 52 ist an einem sich axial erstreckenden Stopfen 68 angebracht oder einstückig mit diesem ausgebildet, der flexibel ist und ein elastisch vorspannendes Element 70 aufnimmt, welches hilft, den Positionierer 72 in einem Hohlraum (Fig. 7) innerhalb des Stopfens 68 zu fangen.

Der Stopfen 68 ist von hohler oder rohrförmiger Bauweise und kann ein Rohr oder eine Hülse sein, das/die vorzugsweise im wesentlichen zylindrisch ist. Der Stopfen 68 ist teleskopisch in einem Lagerteil 76 aufgenommen. Das Lagerteil 76 kann mit der Form 40 oder einem Ausdrückstift 102 oder 103 einstückig ausgebildet sein oder eine trennbare Komponente sein, die an einem Ende des Stiftes 102 oder 103 angebracht ist oder in einer Tasche in der Form 40 aufgenommen ist.

Das Vorspannelement 70 umfaßt vorzugsweise ein Polster aus nicht-metallischem Material, das vorzugsweise flexibel und elastisch ist. Das Polster 70 besteht vorzugsweise aus Gummi, einem gummiähnlichen Material, einem Elastomer, einem Polymer, einem Kunststoff, Nylon, einem thermoplastischen Material, einem in Wärme ausgehärteten (Thermoset) Material oder einem anderen Material, das zur Verwendung beim Vorspannen des Positionierers 72 von einer Bohrung 294 in einer Seitenwand 296 des Stopfens 68 nach außen geeignet ist.

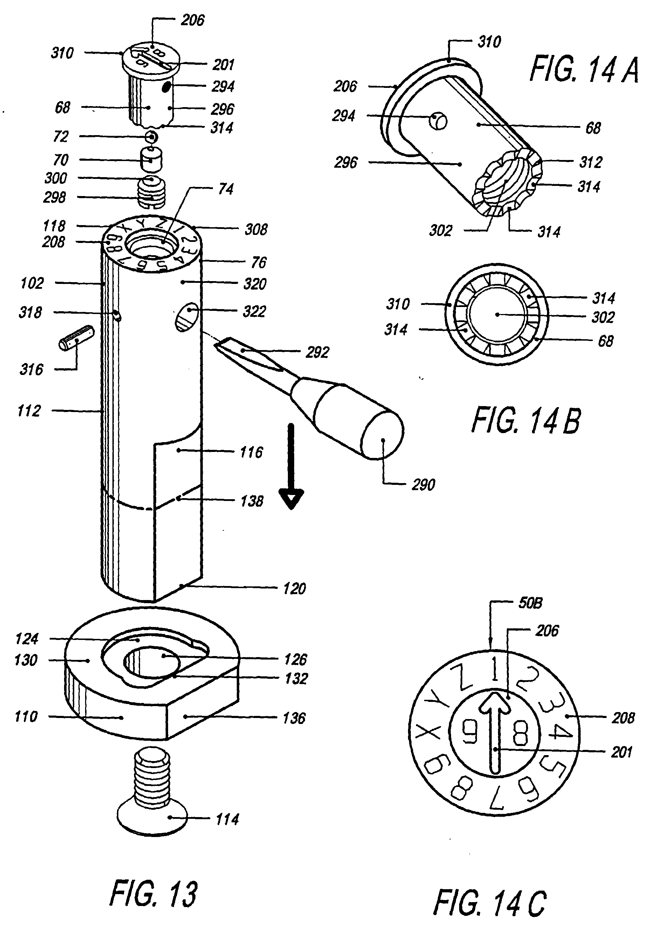

Der Positionierer 72 hat vorzugsweise eine gerundete Oberfläche, die sich wesentlichen von der Bohrung 294 (Fig. 13) radial nach außen erstreckt und die in einer Nut 74 in der Innenfläche des Lagerteils 76 aufgenommen ist, wenn der Stopfen 68 in das Lagerteil 76 eingeführt ist. Obwohl der Positionierer 72 einen Stift oder dergleichen umfassen kann, umfaßt der Positionierer 72 vorzugsweise eine Kugel, wie bei einem Kugellager oder dergleichen.

Wie in Fig. 13 deutlicher dargestellt ist, wird das Vorspannelement 70 in dem Stopfen 68 durch einen Halter 298 zurückgehalten, der vorzugsweise eine Schraube, vorzugsweise eine Stellschraube, oder ein Bolzen ist, der in einen Gewindeabschnitt des Hohlraums 302 (Fig. 14A und 14B) in dem Stopfen 68 eingeschraubt ist. In seiner bevorzugten Ausführungsform ist der Halter 298 ein Federkolben, der eine Spitze 300 hat, welche an dem Vorspannelement 70 lagen. Der Halter 298 ist auch so konstruiert und ausgebildet, daß er sowohl das Vorspannelement 70 als auch den Positionierer 72 in dem Hohlraum 302 innerhalb des Stopfens 68 fängt. Gemeinsam drücken der Halter 298 und das Vorspannelement 70 den Positionierer 72 von der Öffnung 294 nach außen, erlauben dem Positionierer 72 aber, wenigstens ein wenig in die Öffnung 294 zurückgezogen zu werden, um den Stopfen 68 schnell und leicht in das Lagerteil 76 einführen und aus diesem herausbewegen zu werden.

Um den Positionierer 72 und das Vorspannelement 70 aus dem Stopfen 68 zu entfernen, hat die Seitenwand 296 des Stopfens 68 eine Zugriffsöffnung 304 (Fig. 11), durch die ein Werkzeug, wie ein Schraubendreher 290 in die Öffnung 304 eingeführt werden kann. Bei entferntem Halter 298 wird das Werkzeug 290 durch die Öffnung 304 eingeführt um das Vorspannelement 70 frei zu hebeln, derart, daß das Vorspannelement 70 und der Positionierer 72 auch aus dem Hohlraum 302 heraus gedrückt werden.

Das Lagerteil 76 hat einen Hohlraum 306, in welchen der Stopfen 68 teleskopisch eingeführt ist. Mit Bezug auf Fig. 11 hat das axiale Ende 118 des Lagerteils 76 vorzugsweise eine Aussparung 308, die dem Kopf 310 bei dem Einsatz 50 oder 52, der von dem Stopfen 68 getragen wird, komplementär ist, so daß die äußere axiale Oberfläche des Kopfes 310 oder des durch den Stopfen 68 getragenen Einsatzes 50 oder 52 mit der äußeren axialen Oberfläche des Lagerteils 76 fluchtet oder im wesentlichen fluchtet, wenn der Stopfen 68 in das Lagerteil 76 eingeführt ist. Um den Stopfen 68 im Lagerteil 76 zu halten, hat der Hohlraum 306 eine sich im wesentlichen nach außen erstreckende Innennut 74, die den Positionierer 72 aufnimmt.

Wie in den Figuren 14A und 14B deutlicher dargestellt ist hat das innere axiale Ende 312 des Stopfens 68 eine Mehrzahl von in Abstand zueinander liegender Anschlagaufnahmen 314, die jeweils vorzugsweise eine Kerbe oder dergleichen sind, welche einen Anschlag 316 aufnimmt, der vorzugsweise ein Stift 316 ist, welcher in einer sich radial nach innen durch die Seitenwand 320 des Lagerteils in den Hohlraum 306 des Lagerteils erstreckenden Bohrung 318 aufgenommen ist. Wie in Fig. 13 zu sehen ist wirken die Anschlagkerben 314 mit dem Anschlagstift 316 (Fig. 7) derart zusammen, daß der Stopfen 68 und dadurch der durch den Stopfen 78 getragene Einsatz 50 oder 52 wahlweise in Bezug zu dem Lagerteil 76 indiziert (eingerastet) werden kann. Vorzugsweise wird ein Werkzeug, wie ein Schraubendreher 290, verwendet, um den Stopfen 68 über einen Schlitz 201 zu indizieren (in Raststellungen zu bringen). Damit der Stopfen 68 schnell und leicht aus dem Lagerteil 76 entfernt werden kann, hat die Lagerteil-Seitenwand 320 eine Zugriffsöffnung 322, durch welche ein Werkzeug, wie ein Schraubendreher 290, eingeführt werden kann, um den Stopfen 68 nach oben zu hebeln, bis dieser frei liegt. Danach kann der Stopfen 68 mit der Hand entfernt werden und ein anderer Stopfen 68 mit einem unterschiedlichen Einsatz oder dergleichen, in das Lagerteil 76 eingeführt werden.

Der Stopfen 69 ist aus einem Material hergestellt, das dauerhaft, elastisch, dicht und vorzugsweise abnutzungsfest ist, um den Umgebungsanforderungen einer Form zu widerstehen. Das Lagerteil 76 ist auch aus einem Material hergestellt, das dauerhaft, elastisch, dicht und vorzugsweise abnutzungsfest ist. Der Stopfen 68 ist vorzugsweise aus einem Metall hergestellt, wie einem 455-Edelstahl, einem 440-Edelstahl, einem 420-Edelstahl, H13, A2 oder einer anderen Legierung. Vorzugsweise ist der Stopfen 68 hergestellt aus einem 450-Edelstahl. Bedarfsweise kann der Stopfen 68 aus einem Thermoset-Material, einem keramischen Material, Messing, Aluminium, Kupfer oder einem Verbund- oder Synthetikmaterial hergestellt sein. Das Lagerteil 76 ist vorzugsweise aus einem Metall hergestellt, wie H13, A2, 420-Edelstahl, 440-Edelstahl, 450-Edelstahl oder einer anderen Legierung. Vorzugsweise ist das Lagerteil 68 aus einem Material hergestellt, das wärmebehandelt, nitriert oder oberflächengehärtet sein kann. Bedarfsweise kann das Lagerteil 46 aus einem Thermoset-Material, einem keramischen Material, Messing, Aluminium, Kupfer oder einem Verbund- oder Synthetikmaterial hergestellt sein.

### Nutzungs- und Betriebsweise

Im Gebrauch werden die Einsätze der Erfindung, vorzugsweise die Einsätze 50 und 52, zum Eindrücken eines Stempels in das härtbare Material 53 in einem Hohlraum oder zum Lenken oder Steuern des Flusses des härtbaren Materials 53 stromaufwärts eines Form-Hohlraumes verwendet. Die Einsätze der Erfindung sind gut geeignet, für die Verwendung in formgebenden Anwendungen, beispielsweise, wenn Kunststoff, Metall, ein Polymer oder ein anderes Material das zu formende, härtbare Material 53 ist. Die Einsätze der Erfindung sind ebenfalls gut geeignet für die Verwendung in anderen formgebenden Anwendungen, einschließlich Anwendungen, bei welchen ein Metall, wie Stahl, Aluminium, Titan, Kupfer, Eisen oder ein anderes Metall das formende, härtbare Material 53 ist.

Im Gebrauch werden die Drehmechanismen 54 und 66 der Erfindung verwendet, um die Einsätze, wie den Einsatz 50 oder 52, in die Lage zu versetzen, schnell und leicht gedreht zu werden, derart, daß die Stillstandzeit der Form im Vergleich zu anderen Mechanismen verringert und vorzugsweise minimiert wird. Zusätzlich sind Drehmechanismen 54 und 66 gut geeignet um mit Einsätzen eines anderen Typs als stempeleindrückenden Einsätzen 50 oder flußsteuernden oder flußlenkenden Einsätzen 52 verwendet zu werden.

Im Gebrauch sind die Ausführungsformen des Ausdrückstiftes 102, 102a, 102b und 102c der Erfindung vorteilhaft anpassungsfähig, dahin gehend, daß mit diesen die mit Einsätzen, wie dem Einsatz 50, vorausgestatteten Ausdrückstifte versandt werden können und an einer anderen Steile zugeschnitten werden können, wie dem Standort der Form. Durch ihre vorteilhafte Bauweise wird die Herstellungszeit verringert und dadurch die Produktion erhöht. Darüber hinaus können die Ausdrückstifte durch ihre Konstruktion für die Form, in welcher sie verwendet werden sollen, akkurat zugeschnitten werden, wobei dadurch allen Toleranzabweichungen oder dergleichen, die in der Form vorliegen können, Rechnung getragen wird und dadurch eine übermäßige Abnutzung verhindert wird und ein möglicherweise auftretendes Aufeinanderstoßen minimiert bzw. verhindert wird.

Im Betrieb wird der stempeleindrückende Einsatz 50 dazu verwendet, einen Eindruck von zweidimensionaler oder dreidimensionaler Kontur in das härtbare Material 53 einzudrücken, so daß der Eindruck in dem härtbaren Material 53 verbleibt, selbst nachdem dieses vollständig gehärtet ist. Wenn der Einsatz an einem Ausdrückstift 102 oder 103 angebracht ist, wird der Stift von der Form 40 nach außen gedrückt, derart, daß der Einsatz 50 in Kontakt mit dem härtbaren Material 53 kommt und einen Eindruck in diesem hinterläßt, derart, daß der Eindruck bleibt, wenn das Material 53 gehärtet ist. Wenn der Stift 102 oder 103 weiter bewegt wird, drückt dieser das nun in der gegossenen Form vorliegende Material 53 weg aus dem Formhohlraum, so daß es vollständig aus der Form 40 entnommen werden kann.

Damit der Einsatz 50 gedreht oder indiziert (in Raststeilungen gebracht) werden kann, wird die Form 40 geöffnet was den Einsatz 50 freilegt. Ein Werkzeug, vorzugsweise ein Schraubendreher 290, wird dazu verwendet in den Einsatz 50 einzugreifen und den Einsatz 50 für einen oder mehrere Ringe des Einsatzes 50 in die gewünschte Position zu drehen. Wenn die gewünschte Position einmal eingestellt ist wird die Form 40 geschlossen und kann der Formungsvorgang beginnen. Als Ergebnis der vorher beschriebenen Anschlagbauweise, wandert die Position des Einsatzes 50 oder eines Ringes des Einsatzes 50 während des wiederholten Zyklus der Form 40 nicht.

Der flußsteuernde oder -lenkende Einsatz 52 wird dazu verwendet, den Fluß des härtbaren Materials 53 zu lenken oder zu steuern und ist typischerweise in einem Kanal angeordnet, wie einem Laufkanal oder Hauptkanal 86 und 88, zwischen der Quelle des härtbaren Materials 90 und einem oder mehreren Formhohlräumen 42, 44, 46, 48. Um die Position des Einsatzes 52 zu ändern, wird die Form 40 geöffnet und wird ein Werkzeug 290 verwendet um in den Einsatz 52 einzugreifen und diesen zu drehen. Wenn der Einsatz 52 zu der gewünschten Position gedreht worden ist, wird die Form 40 geschlossen und kann die Form 40 betrieben werden. Durch seine vorteilhafte Bauweise wird jeder Einsatz 52a, 52b und 52c dazu verwendet, den Fluß des härtbaren Materials 53 nur in dem Formhohlraum bereit zu stellen, in welchem der Fluß des härtbaren Materials 53 gebraucht wird. Somit werden für Produktionsläufe, in welchen nur einige Hohlräume benutzt werden, um Komponenten zu formen und andere nicht dazu benutzt werden müssen, ein oder mehrere Einsätze 52 dazu verwendet den Fluß zu kontrollieren.

Im Gebrauch wird der erste bevorzugte Drehmechanismus 54 dazu verwendet, die Drehung eines Einsatzes, wie den Einsatz 50 oder 52, zu erleichtern. Der Drehmechanismus 54 erlaubt vorzugsweise, daß der Einsatz wahlweise auf voreingestellte bzw. vorbestimmte Positionen indiziert werden kann. Wenn der Einsatz in eine Richtung gedreht wird, kann dieser solange gedreht werden, bis die Führung 240 ein Ende, vorzugsweise eine Endwand, des axialen Abschnitts der Nut 58 in ihrer äußeren Seitenwand erreicht. Dieses Ende der Nut funktioniert als Grenze des Bereichs der Dreheinstellung des Drehmechanismus 54.

Wenn der Einsatz in die entgegengesetzte Richtung gedreht wird, bewegt sich die Führung 240 in den axialen Abschnitt 62 der Nut 58, bis sie das andere Ende des axialen Abschnitts 62 erreicht. Das andere Ende des axialen Abschnitts 62 der Nut 58 kommuniziert mit einem helischen oder schraubenförmigen Abschnitt 60, derart, daß die Führung 240 in den axialen Nutabschnitt 62 gleitet, bis sie den helischen Nutabschnitt 60 erreicht. Eine weitere Drehung bewirkt; daß die Führung 240 in dem helischen Abschnitt 60 gleitet, was der Stopfen 56 des Drehmechanismus 54 und den Einsatz dazu veranlaßt, sich relativ zum Lagerteil 64, in welchem diese aufgenommen sind, axial nach oben zu verschieben. Eine weitere Drehung bewirkt, daß die Führung 240 weiter entlang des helischen Abschnitts 60 gleitet bis sie das Ende des helischen Abschnitts 60 erreicht, und die Führung 240 gelangt über das Ende des helischen Abschnitts 60 hinaus, wodurch sich der Stopfen 56 vollständig von dem Lagerteil 64 löst so daß er lose vom Lagerteil 64 abgehoben und entfernt werden kann.

Danach kann bedarfsweise ein anderer durch einen anderen Drehmechanismus 54 getragene Einsatz in das Lagerteil 64 eingeführt werden. Bedarfsweise kann der Einsatz einfach gewechselt werden und der gleiche Drehmechanismus 54 in das Lagerteil 64 eingeführt werden.

Um den Drehmechanismus 54 in das Lagerteil 64 einzuführen, wird der Stopfen 56 in den Lagerteil-Hohlraum 232 eingesetzt, bis sein axiales Ende auf der Führung 240 ruht. Der Stopfen 650 wird gedreht, bis die Führung 240 in dem offenen Ende oder Eingangsweg des helischen Abschnitts 60 der Nut 62 aufgenommen ist. Eine weitere Drehung bewirkt, daß der Stopfen 56 durch Zusammenwirkung zwischen der Führung 240 und der Nut 58 in das Lagerteil 64 nach unten gezogen wird, wenn er in dem helischen Abschnitt 60 gleitet. Vorzugsweise wird der Stopfen 56 solange gedreht, bis die Führung 240 in dem axialen Nutabschnitt 62 aufgenommen ist.

In der dargestellten, bevorzugten Ausführungsform wird der Stopfen 56 gegen den Uhrzeigersinn gedreht, um den Stopfen 56 aus dem Lagerteil 64 zu entfernen, und wird der Stopfen 56 im Uhrzeigersinn gedreht, um den Stopfen 56 in das Lagerteil 64 einzusetzen.

Der zweite Drehmechanismus 66 wird derart gedreht, daß seine Führung; der Positionierer 72, in der Nut 74 gleitet, bis der Einsatz in der gewünschten Position liegt. Der Anschlag 316 und die Anschlagkerben 314 wirken derart zusammen, daß der Stopfen 68 des Drehmechanismus 66 wahlweise eingerastet werden kann.

Um den Drehmechanismus 66 und den Einsatz zu entfernen, wird ein Werkzeug 290 durch die Öffnung 322 hindurch eingeführt und greift an das axiale Ende des Stopfens 68 an. Unter Verwendung des Werkzeugs 290 wird ein Druck gegen das axiale Ende des Stopfens 68 ausgeübt, um den Stopfen 68 und den Einsatz relativ zum Lagerteil 76 nach oben zu drücken. Wenn der Stopfen 68 nach oben gedrückt ist, wird der Positionierer 72 im wesentlichen radial nach innen in den Stopfen 68, gegen das Vorspannelement 70, gedrückt, derart, daß der Positionierer 72 die Nut 74 freigibt, wodurch sich dieser vom Lagerteil 76 löst. Nachdem sich das Vorspannelement 70 vom Lagerteil 76 gelöst hat, bewirkt ein zusätzlicher Druck, daß sich der Stopfen 68 weiter in Bezug zum Lagerteil 76 axial nach oben bewegt, bis der Stopfen 68 mit der Hand frei vom Lagerteil 76 abgehoben werden kann.

Um den Drehmechanismus 66 in das Lagerteil 76 einzuführen, wird der Stopfen 68 in dem Lagerteil-Hohlraum 306 derart angeordnet, daß seine Seitenwand 296 gleitfähig, teleskopisch in dem Lagerteil 76 aufgenommen ist. Ein Druck wird auf die Außenfläche 198 des Einsatzes ausgeübt, um den Stopfen 68 weiter in den Hohlraum 306 zu drücken. Durch Beaufschlagung mit einem Druck wird der Positionierer 72 durch die innere Seitenwand des Lagerteils 76 nach innen gegen das Vorspannelement 70 im Stopfen 68 gezwungen. Wenn der Positionierer 72 in der Nut 74 in der inneren Seitenwand des Lagerteils 76 aufgenommen ist wird dieser durch das Vorspannelement 70 nach außen gedrückt, wodurch der Positionierer 72 an das Lagerteil 76 angreift. Wenn der Positionierer 72 durch die Aufnahme in seiner Nut 74 mit dem Lagerteil 76 in Eingriff gebracht ist, kann der Stopfen 68 gedreht werden, kann aber nicht axial verschoben werden.

Das Vorstehende soll so verstanden sein, daß, obwohl die vorstehende Beschreibung und Zeichnung im Detail bevorzugter Ausführungsformen der vorliegenden Erfindung beschreibt und darstellt, dem Fachmann, auf den die vorliegende Erfindung abzustellen ist, die vorliegende Offenbarung viele Modifikationen und Bauweisen sowie sich weitgehend unterschiedliche Ausführungsformen und Anwendungen nahelegt, ohne dadurch den Gedanken und Schutzbereich der Erfindung zu verlassen. Die vorliegende Erfindung soll daher nur durch den Schutzbereich der angefügten Ansprüche begrenzt sein.

## Patentansprüche

1. Einsatz für eine Form mit:
einem Stopfen mit einer axialen Außenfläche;
einer Aufnahme mit einem Hohlraum zur Aufnahme des Stopfens; und
einem Drehmechanismus, der mit dem Stopfen und der Aufnahme betriebsfähig zusammenwirkt, damit der Einsatz in Bezug zur Form drehbar ist.

2. Einsatz nach Anspruch 1, ferner mit einer Nut in entweder dem Stopfen oder der Aufnahme und einem komplementär entweder von der Aufnahme oder dem Stopfen getragenen Positionierer, wobei der Positionierer in der Nut aufgenommen ist, damit die axial äußere Einsatzfläche relativ zur Form gedreht werden kann, während gleichzeitig das Herausziehen des Stopfen aus der Aufnahme unterbunden wird.

3. Einsatz nach Anspruch 2, in welchem die Aufnahme eine Seitenwand hat die den Hohlraum begrenzt, und eine innere Seitenwandfläche hat die mit dem Hohlraum kommuniziert, und in welchem die Nut in der inneren Seitenfläche angeordnet ist und sich der Positionierer von dem Stopfen nach außen erstreckt.

4. Einsatz nach Anspruch 3, in welchem der Stopfen einen Kopf und einen Körper umfaßt, der im Hohlraum aufgenommen ist und in welchem der Körper den Positionierer trägt.

5. Einsatz nach Anspruch 3, in welchem der Körper eine Seitenwand umfaßt und der Positionierer eine Kugel umfaßt, die von der Seitenwand des Körpers nach außen vorgespannt ist.

6. Einsatz nach Anspruch 3, in welchem der Stopfen ein axiales Ende mit einer Mehrzahl von umfänglich in Abstand liegender Rasten im axialen Ende aufweist,
die mit einem Anschlag in dem Hohlraum zusammenwirken, um den Stopfen in Raststellungen zu bringen.

7. Einsatz nach Anspruch 6, in welchem der Anschlag einen Stift umfaßt, der sich radial nach innen in den Hohlraum erstreckt.

8. Einsatz nach Anspruch 4, in welchem der Körper des Stopfens einen Hohlraum hat, und ferner mit einem in dem Hohlraum aufgenommenen Vorspannelement, das den Positionierer von dem Körper des Stopfens nach außen vorspannt.

9. Einsatz nach Anspruch 8, in welchem der Hohlraum in dem Körper des Stopfens ein Innengewinde aufweist, und ferner mit einem mit Außengewinde versehenen Halter, der in den Hohlraum eingeschraubt ist, um das Vorspannelement im Hohlraum zurückzuhalten.

10. Einsatz nach Anspruch 9, in welchem das Vorspannelement ein nichtmetallisches Polster umfaßt.

11. Einsatz nach Anspruch 10, in welchem das Polster ein Gummi oder ein Polymer umfaßt.

12. Einsatz nach Anspruch 10, in welchem das Polster ein Elastomer umfaßt.

13. Einsatz nach Anspruch 3, in welchem:
der Stopfen umfaßt eine im wesentlichen zylindrische Seitenwand, die sich axial vom Kopf aus erstreckt und die in dem Hohlraum in der Aufnahme aufgenommen ist, wobei die Seitenwand ein axiales Ende mit einer Mehrzahl von in Abstand liegender Rasten im axialen Ende aufweist, und eine Bohrung durch die Seitenwand hindurch, und in welchem die Seitenwand einen Hohlraumstopfen begrenzt;
ein im wesentlichen zylindrisches Elastomerpolster in dem Hohlraum aufgenommen ist, welches den Positionierer durch die Bohrung hindurch im wesentlichen radial von der Seitenwand nach außen drückt;
ein Halter in dem Hohlraum aufgenommen ist, der an die Seitenwand angreift und das Polster in dem Hohlraum zurückhält;
ein durch die Aufnahme getragener Stift, der sich radial nach innen in den Hohlraum erstreckt und mit wenigstens einem der Rasten in dem axialen Ende der Seitenwand des Stopfens zusammenwirkt, um den Stopfen in Bezug zur Aufnahme einrasten zu lassen.

14. Einsatz nach Anspruch 13, in welchem die Aufnahme ein Lagerteil umfaßt, das in einer Tasche in einem Hohlraum in der Form aufgenommen ist und die axiale Außenfläche des Stopfens eine stempeleindrückende Oberfläche zum Aufbringen eines Eindrucks in ein in dem Formhohlraum aufgenommenes, härtbares Material umfaßt.

15. Einsatz nach Anspruch 14, in welchem das Lagerteil aus der Tasche in der Form entfernbar ist.

16. Einsatz nach Anspruch 15, in welchem das Lagerteil eine Bodenwand mit einer Bohrung umfaßt und ferner mit einem Befestigungselement das das Lagerteil an der Form lösbar befestigt.

17. Einsatz nach Anspruch 14, in welchem das härtbare Material Kunststoff umfaßt.

18. Einsatz nach Anspruch 14, in welchem das haftbare Material Metall umfaßt.

19. Einsatz nach Anspruch 13, in welchem 1) die Form einen Hohlraum zum Aufnehmen eines hartbaren Materials aus einer Quelle von härtbarem Material hat 2) die Aufnahme in einer Tasche in der Form aufgenommen ist 3) die axiale Außenfläche des Stopfens einen Kanal hat und 4) in welchem der Stopfen i) in eine Öffnungsposition gedreht ist, um den Fluß des härtbaren Materials von der Quelle durch den Kanal zu dem Hohlraum in der Form zu gestatten, und ii) in eine Schließposition gedreht ist die von der Öffnungsposition versetzt ist um den Fluß des härtbaren Materials von der Quelle durch den Kanal und zu dem Hohlraum in der Form zu hindern.

20. Einsatz nach Anspruch 13, in welchem die Aufnahme und der Stopfen von einem Ausdrückstift getragen werden.

21. Einsatz nach Anspruch 20, in welchem der Ausdrückstift einen im wesentlichen zylindrischen Zylinder mit einem an einem Ende des Zylinders lösbar befestigten Kopf umfaßt und in welchem das Lagerteil und der Stopfen an einem entgegengesetzten Ende des Zylinders angeordnet sind.

22. Einsatz nach Anspruch 21, ferner mit einem den Kopf an dem Zylinder lösbar befestigenden Befestigungselement.

23. Einsatz nach Anspruch 21, in welchem der Kopf eine Gewindebohrung hat und der Zylinder einen Gewindeabschnitt zur Schraubbefestigung des Kopfes an dem Zylinder hat.

24. Einsatz nach Anspruch 2, in welchem die Aufnahme eine Seitenwand mit einer inneren Seitenwandfläche hat die den Hohlraum begrenzt, und in welchem a) sich der Positionierer von der inneren Seitenwandfläche ausdehnt und b) die Nut in dem Stopfen angeordnet ist.

25. Einsatz nach Anspruch 24, in welchem die Nut einen schraubenförmigen Abschnitt und einen im wesentlichen quer zu einer Längsachse des Stopfens angeordneten Abschnitt hat.

26. Einsatz nach Anspruch 25, in welchem die Nut nur einen einzigen schraubenförmigen Abschnitt und nur einen einzigen im wesentlichen quer verlaufenden Abschnitt hat.

27. Einsatz nach Anspruch 26, in welchem sich die Nut nicht mehr als etwa eineinhalb Mal um den Umfang des Stopfens herum erstreckt.

28. Einsatz nach Anspruch 25, in welchem sich der quer verlaufende Abschnitt wenigstens um 250° um den Umfang des Stopfens herum erstreckt.

29. Einsatz nach Anspruch 25, in welchem der schraubenförmige Abschnitt in Bezug zu dem quer verlaufenden Abschnitt spitz angewinkelt ist.

30. Einsatz nach Anspruch 25, in welchem die Nut eine Tiefe von wenigstens etwa 0,020 Inch hat.

31. Einsatz nach Anspruch 30, in welchem die Nut eine Breite von wenigstens etwa 0,040 Inch hat.

32. Einsatz nach Anspruch 26, in welchem die Nut eine kurvenlineare Querschnittskontur hat.

33. Einsatz nach Anspruch 32, in welchem die Aufnahme eine Bohrung hat und der Positionierer ferner umfaßt, eine in der Bohrung aufgenommene Kugel, die einen Bereich aufweist, der sich nach außen in den Hohlraum erstreckt, und in welchem der sich nach außen in den Hohlraum erstreckende Bereich der Kugel in der Nut aufgenommen ist, um den Stopfen in Bezug zu der Aufnahme drehen zu können und gleichzeitig den Stopfen daran zu hindern, sich in axialer Richtung relativ zur Aufnahme zu bewegen.

34. Einsatz nach Anspruch 33, in welchem die Kugel durch eine an der Aufnahme lösbar befestigte Platte in der Bohrung zurückgehalten wird.

35. Einsatz nach Anspruch 25, in welchem
a) der Hohlraum aufweist einen vergrößerten Abschnitt, einen abgestuften Abschnitt, einen sich nach innen erstreckende Schulter, die zwischen dem vergrößerten Abschnitt und dem abgestuften Abschnitt angeordnet ist;
b) der Stopfen einen Kopf, einen abgestuften Schaft und eine zwischen dem Kopf und dem Schaft angeordnete Schulter umfaßt; und
c) in welchem der Schaft in dem abgestuften Abschnitt des Hohlraums aufgenommen ist, der Kopf in dem vergrößerten Abschnitt des Hohlraums aufgenommen ist und die Schulter des Stopfens an der Schulter des Hohlraumes angeordnet ist, wenn der Stopfen in dem Hohlraum aufgenommen ist.

36. Einsatz nach Anspruch 35, in welchem 1) die Nut in dem Äußeren des Kopfes angeordnet ist, 2) der schraubenförmige Abschnitt der Nut an einem an die Schulter des Stopfens angrenzenden Ende offen ist und mit dem quer verlaufenden Abschnitt der Nut kommuniziert, 3) der quer verlaufende Abschnitt der Nut ein Ende aufweist,
das in Kommunikation mit dem spiralförmigen Abschnitt der Nut steht und eine Endwand an einem entgegengesetzten Ende aufweist und 4) in welchem der Positionierer eine sich nach innen erstreckende Führung umfaßt, die in der Nut gleitet, derart, daß i), wenn die Führung in dem quer verlaufenden Abschnitt der Nut gleitet,
der Stopfen in Bezug zu dem Lagerteil gedreht werden kann, ohne dabei diesen relativ zum Lagerteil zu verschieben, und ii), wenn die Führung in dem schraubenförmigen Abschnitt der Nut gleitet, eine Drehung des Stopfens den Stopfen in Bezug zu dem Lagerteil axial verschiebt, wodurch der Stopfen aus dem Lagerteil entfernt werden kann.

37. Einsatz nach Anspruch 35, in welchem die Schulter des Stopfens bei der Mehrzahl von in Abstand liegender Rasten hat und die Aufnahme einen Anschlag hat, der sich nach innen in den Hohlraum erstreckt, und der Anschlag mit wenigstens einem der Rasten zusammenwirkt, um den Stopfen wahlweise drehen zu können.

38. Einsatz nach Anspruch 37, in welchem der Anschlag nahe der Schulter des Hohlraums angeordnet ist.

39. Einsatz nach Anspruch 38, in welchem der Anschlag eine Kugel umfaßt, die elastisch in Richtung des Hohlraums derart vorgespannt ist daß ein Bereich der Kugel in dem Hohlraum angeordnet ist.

40. Einsatz nach Anspruch 24, in welchem die Aufnahme ein Lagerteil umfaßt das durch ein Befestigungselement lösbar an der Form angebracht ist.

41. Einsatz nach Anspruch 24, in welchem die Aufname ein Lagerteil umfaßt und das Lagerteil und der Stopfen von einem Ausdrückstift getragen werden, der mit der Form betriebsfähig zusammenwirkt.

42. Einsatz nach Anspruch 41, in welchem das Lagerteil durch ein Befestigungselement lösbar an dem Ausdrückstift angebracht ist.

43. Einsatz nach Anspruch 24, in welchem die Aufnahme ein Lagerteil umfaßt und der Stopfen und das Lagerteil in einer Tasche in einem Hohlraum in der Form aufgenommen sind und die axiale Außenfläche des Stopfens eine stempeleindrückende Oberfläche zum Aufbringen eines Eindrucks in einem in dem Formhohlraum aufgenommenen härtbaren Material umfaßt.

44. Einsatz nach Anspruch 43, in welchem das härtbare Material Kunststoff umfaßt.

45. Einsatz nach Anspruch 43, in welchem das härtbare Material Metall umfaßt.

46. Einsatz nach Anspruch 24, in welchem 1) die Form einen Hohlraum zur Aufnahme eines härtbaren Materials aus einer Quelle von härtbarem Material hat, 2) die Aufnahme ein Lagerteil umfaßt das in einer Tasche in der Form aufgenommen ist, 3) die axiale Außenfläche des Stopfens einen Kanal hat und 4) in welchem der Stopfen i) in eine Öffnungsposition gedreht ist um einen Fluß des härtbaren Materials von der Quelle durch den Kanal zu dein Hohlraum in der Form zu gestatten, und ii) in eine von der Öffnungsposition versetzte Schließposition gedreht ist um den Fluß des härtbaren Materials von der Quelle durch den Kanal zu dem Hohlraum in der Form zu unterbinden.

47. Einsatz nach Anspruch 1, in welchem der Einsatz von einem Ausdrückstift gefragen wird, der einen runden Stabstahl umfaßt, mit einem Zylinder, der gehärtet ist, und einem Abschnitt mit größerem Durchmesser, der auf Länge zugeschnitten ist und maschinenbearbeitet ist, um einen Kopf zu bilden, der einen größeren Durchmesser als der Zylinder hat.

48. Einsatzanordnung für eine Form mit:
einem ersten Stopfen mit einer äußeren Axialfläche und einem Hohlraum in der äußeren Axialfläche;
einer Aufnahme mit einem Hohlraum zur Aufnahme des Stopfens;
einem ersten Drehmechanismus, der mit dem ersten Stopfen und der Aufnahme betriebsfähig zusammenwirkt, um den ersten Stopfen relativ zur Form drehen zu können;
einem zweiten Stopfen, der in dem Hohlraum in dem ersten Stopfen aufgenommen ist und eine axiale Außenfläche aufweist; und
einem zweiten Drehmechanismus, der mit dem zweiten Stopfen und dem ersten Stopfen betriebsfähig zusammenwirkt, um den zweiten Stopfen relativ zu dem ersten Stopfen drehen zu können.

49. Einsatz für eine Form mit:
einem Stopfen mit einem Kopf mit einer axialen Außenfläche, einem im wesentlichen zylindrischen Körper, der im Durchmesser kleiner als der Kopf ist und eine Nut aufweist, und einer Schulter, die dort ausgebildet ist wo sich Kopf und Körper verbinden;
einer Aufnahme mit einem Hohlraum zur Aufnahme des Stopfens mit dem durch eine Seitenwand begrenzten Hohlraum und mit einer radialen Schulter, einem ersten Abschnitt zur Aufnahme des Kopfes des Stopfens, einem zweiten Abschnitt, der im Durchmesser kleiner als der erste Abschnitt zur Aufnähme des Körpers des Stopfens ist, und einen Positionierer, der von der Seitenwand getragen wird, die in der Nut aufgenommen ist, wenn der Stopfen in dem Hohlraum aufgenommen ist; und
einer durch eine der Schultern getragenen Anschlaganordnung zum Zusammenwirken mit der anderen der Schultern, um den Stopfen wahlweise einrasten zu lassen.

50. Einsatz für eine Form mit:
einem Stopfen mit einem Kopf mit einer axialen Außenfläche, einem im wesentlichen zylindrischen Körper, der im Durchmesser kleiner als der Kopf ist und einen elastisch radial nach außen vorgespannten Positionierer trägt, und einer Schulter, die dort ausgebildet ist, wo sich der Kopf und der Körper verbinden;
einer Aufnahme mit einem Hohlraum zum Aufnehmen des Stopfens mit dem durch eine Seitenwand begrenzten Hohlraum und mit einer radialen Schulter, einem ersten Abschnitt zum Aufnehmen des Kopfes des Stopfens, einem zweiten Abschnitt, der im Durchmesser kleiner als der erste Abschnitt zum Aufnehmen des Körpers des Stopfens ist und einer Nut in der Seitenwand, die den Positionierer des Stopfens aufnimmt, wenn der Stopfen in den Hohlraum aufgenommen ist; und
einer von der Aufnahme getragenen Anschlaganordnung zum Zusammenwirken mit dem Stopfen, um den Stopfen wahlweise einrasten zu lassen.
